# EUROPEAN PATENT SPECIFICATION

(11) **EP 4 342 779 B1**
(45) Date of publication and mention of the grant of the patent: **25.02.2026**
(21) Application number: 21959185.6
(22) Date of filing: 30.12.2021
(51) Int. Cl.: B62M 7/02, B62K 11/04, B62K 5/00, B62K 19/00, B60L 53/16

(54) **ALL-TERRAIN VEHICLE**
GELÄNDEFAHRZEUG
VÉHICULE TOUT-TERRAIN

(30) Priority: 28.09.2021 CN 202111146655
(43) Date of publication of application: 27.03.2024
(73) Proprietor: Zhejiang CFMOTO Power Co., Ltd., Hangzhou, Zhejiang 311100 (CN)
(72) Inventor: ZHENG, Hanfeng, Hangzhou, Zhejiang 311100 (CN); LI, Jiajun, Hangzhou, Zhejiang 311100 (CN); CAO, Zhibin, Hangzhou, Zhejiang 311100 (CN); CAO, Han, Hangzhou, Zhejiang 311100 (CN)
(74) Representative: Sun, Yiming
(86) International application number: PCT/CN2021/143246
(87) International publication number: WO 2023/050626

(56) References cited:
- EP-A1- 3 747 681
- CA-A- 1 216 800
- CA-A1- 2 619 874
- CN-A- 103 950 436
- CN-A- 111 886 177
- CN-A- 111 902 339
- CN-U- 207 449 881
- CN-U- 209 817 700
- CN-U- 210 391 424
- CN-U- 211 223 301
- DE-A1- 102020 131 556
- JP-A- 2006 069 506
- JP-A- H01 178 093
- US-A1- 2002 007 978

## Description

### FIELD OF THE DISCLOSURE

The invention relates to the field of vehicles, and in particular to an all-terrain vehicle.

### BACKGROUND OF THE DISCLOSURE

All-terrain vehicles are increasingly popular for their entertainment properties with the improvement of people's living standards. The market and demand for all-terrain vehicle for children are also increasing. The existing all-terrain vehicles for children are simply transformed from adult all-terrain vehicle, and most of all-terrain vehicle for children are all fuel driven all-terrain vehicle with poor controllability and environmental protection, which is difficult to adapt to the needs of all-terrain vehicle for children.

Examples of all-terrain vehicles are disclosed in documents CA 2 619 874 A1, which discloses the features of the preamble of claim 1; CA 1 216 800 A, JP H01 178093 A and US 2002/007978 A1.

### SUMMARY OF THE INVENTION

In view of this, the disclosure provides an all-terrain vehicle, which has good controllability and environmental protection, and can meet the needs of all-terrain vehicle for children.

The disclosure provides an all-terrain vehicle. The all-terrain vehicle includes a frame, a vehicle cover, a plurality of wheels, a drive system, a saddle assembly, a power supply system, and a suspension system. The frame includes a frame body. The vehicle cover is partially connected to the frame. The plurality of wheels includes two first wheels and two second wheels. The drive system includes a drive motor for driving at least one of the first wheels and the second wheels. The saddle assembly is arranged on the frame. The power supply system is at least partially located below the saddle assembly and includes a main power supply for supplying power to the drive system. The suspension system includes a front suspension and a rear suspension, the first wheels are connected to the frame by the rear suspension and the second wheels are connected to the frame by the front suspension. The rear suspension includes a rear rocker arm. The saddle assembly is locked on the frame in a first saddle state and is unlocked on the frame in a second saddle state. The main power supply is fixed below the saddle assembly when the saddle assembly is in the first saddle state. The saddle assembly includes a saddle substantially extending in a front-rear direction, a ratio of a length of the saddle to a length of the all-terrain vehicle is in the range from 0.3 to 0.48. The height direction of the main power supply extends substantially in an upper-lower direction. A vertical projection plane is defined as a plane perpendicular to the left-right direction, a projection of an output shaft of the drive motor projected on the vertical projection plane is defined as a first center point. A projection of an axis of the first wheel projected on the vertical projection plane is defined as a second center point. An angle between a line connecting the first center point and the second center point on the vertical projection plane and a projection line of the main power supply along its height direction projected on the vertical projection plane is in the range from 90°to 120°, and an angle between the projection line of the main power supply along its height direction projected on the vertical projection plane and a projection of the rear rocker arm projected on the vertical projection plane is in the range from 90° to 135°.

The disclosure further provides an all-terrain vehicle. which includes a frame, a vehicle cover, a plurality of wheels, a drive system, a saddle assembly, a power supply system, and a suspension system. The vehicle cover is partially connected to the frame. The plurality of wheels includes two first wheels and two second wheels. The drive system drives at least one of the first wheels and the second wheels. The drive system includes a drive motor. The saddle assembly is arranged on the frame. The power supply system is at least partially located below the saddle assembly and includes a main power supply for supplying power to the drive system. The suspension system includes a front suspension and a rear suspension, the first wheels are connected to the frame by the rear suspension and the second wheels are connected to the frame by the front suspension. The height direction of the main power supply extends substantially in an upper-lower direction. A vertical projection plane is defined as a plane perpendicular to the left-right direction, a projection of an output shaft of the drive motor projected on the vertical projection plane is defined as a first center point. A projection of an axis of the first wheel projected on the vertical projection plane is defined as a second center point. An angle between a line connecting the first center point and the second center point on the vertical projection plane and a projection line of the main power supply along its height direction projected on the vertical projection plane is in the range from 90°to 120°, and an angle between the projection line of the main power supply along its height direction projected on the vertical projection plane and a projection of the rear rocker arm projected on the vertical projection plane is in the range from 90° to 135°. The all-terrain vehicle further includes a power supply compartment below the saddle assembly for mounting at least portion of the power supply system. A ratio of the height of the power supply compartment to the height of the all-terrain vehicle in an upper-lower direction is in the range from 0.3 to 0.45.

The disclosure further provides an all-terrain vehicle, which includes a frame, a vehicle cover, a plurality of wheels, a drive system, a saddle assembly, a power supply system, a suspension system and a control unit. The frame includes a frame body. The vehicle cover is partially connected to the frame. The plurality of wheels includes two first wheels and two second wheels. The drive system includes a drive motor for driving at least one of the first wheels and the second wheels. The saddle assembly is arranged on the frame. The power supply system at least partially located below the saddle assembly, the power supply system comprising a first power supply for supplying power to the drive motor and a second power supply for supplying low-voltage power supply. The suspension system includes a front suspension and a rear suspension, the first wheels are connected to the frame by the rear suspension and the second wheels are connected to the frame by the front suspension. The rear suspension includes a rear rocker arm. The control unit controls the operation of the all-terrain vehicle and includes a motor control unit. The height direction of the first power supply extends substantially in an upper-lower direction. A vertical projection plane is defined as a plane perpendicular to the left-right direction, a projection of an output shaft of the drive motor projected on the vertical projection plane is defined as a first center point. A projection of an axis of the first wheel projected on the vertical projection plane is defined as a second center point. An angle between a line connecting the first center point and the second center point on the vertical projection plane and a projection line of the first power supply along its height direction projected on the vertical projection plane is in the range from 90°to 120°, and an angle between the projection line of the first power supply along its height direction projected on the vertical projection plane and a projection of the rear rocker arm projected on the vertical projection plane is in the range from 90° to 135°.

The disclosure further provides an all-terrain vehicle, which includes a frame, a plurality of wheels, a drive system, a saddle assembly, a power supply system, a brake assembly, a suspension system, a steering assembly, a manipulation assembly, an instrument assembly and a control unit. The frame includes a frame body. The plurality of wheels includes two first wheels and two second wheels. The drive system includes a drive motor for driving at least one of the first wheels and the second wheels. The saddle assembly is arranged on the frame. The power supply system is at least partially located below the saddle assembly and includes a main power supply for supplying power to the drive system. The brake system includes a brake assembly and a parking assembly. The suspension system includes a front suspension and a rear suspension, the first wheels are connected to the frame by the rear suspension and the second wheels are connected to the frame by the front suspension. The rear suspension includes a rear rocker arm. The steering assembly is at least partially connected to the suspension system and includes a steering shaft. The manipulation assembly is at least partially connected to the steering assembly and includes a first grip for right-hand operation and a second grip for left-hand operation. The instrument assembly provides vehicle driving data to the user. The control unit controls the operation of the all-terrain vehicle and is connected to the braking assembly. The height direction of the main power supply extends substantially in an upper-lower direction. A vertical projection plane is defined as a plane perpendicular to the left-right direction, a projection of an output shaft of the drive motor projected on the vertical projection plane is defined as a first center point. A projection of an axis of the first wheel projected on the vertical projection plane is defined as a second center point. An angle between a line connecting the first center point and the second center point on the vertical projection plane and a projection line of the main power supply along its height direction projected on the vertical projection plane is in the range from 90°to 120°, and an angle between the projection line of the main power supply along its height direction projected on the vertical projection plane and a projection of the rear rocker arm projected on the vertical projection plane is in the range from 90° to 135°. The brake assembly includes a circuit breaker electrically connected to the control unit, the circuit breaker does not send a current cut-off signal to the control unit in a first state and send the current cut-off signal to the control unit in a second state. The parking assembly includes a parking mechanism and a limiting buckle that can lock the parking mechanism. The limiting buckle is controlled by the first grip to switch between a first position of releasing the parking mechanism to make the all-terrain vehicle in a non-parking state and a second position of locking the parking mechanism to make the all-terrain vehicle in a parking state. The power supply system can receive a circuit breaker command from the control unit when the limiting buckle is in the second position and the circuit breaker is in the second state.

### BRIEF DESCRIPTION OF THE DRAWINGS

FIG. 1 is a perspective view of an all-terrain vehicle in an embodiment of the disclosure;
FIG. 2 is a sectional view of the all-terrain vehicle in an embodiment of the disclosure;
FIG. 3 is a top plan view of the all-terrain vehicle in an embodiment of the disclosure;
FIG. 4 is a perspective view of a frame of the all-terrain vehicle in an embodiment of the disclosure;
FIG. 5 a perspective view of a front bracket of the all-terrain vehicle in an embodiment of the disclosure;
FIG. 6 is another perspective view of the frame of the all-terrain vehicle in an embodiment of the disclosure;
FIG. 7 is an enlarged view of part A in FIG. 6;
FIG. 8 is a left side view of the frame of the all-terrain vehicle in an embodiment of the disclosure;
FIG. 9 is a top plan view of the frame of the all-terrain vehicle in an embodiment of the disclosure, with wheels connected to the frame;
FIG. 10 is another perspective view of the frame of the all-terrain vehicle in an embodiment of the disclosure;
FIG. 11 is a perspective view of the all-terrain vehicle, in which the first wheels and the second wheels are in a first state;
FIG. 12 is a perspective view of the all-terrain vehicle, in which the first wheels and the second wheels are in a second state;
FIG. 13 is a longitudinal sectional view of the all-terrain vehicle in an embodiment of the disclosure;
FIG. 14 is another perspective view of the all-terrain vehicle, in which the first wheels and the second wheels are in the first state;
FIG. 15 is another perspective view of the all-terrain vehicle, in which the first wheels and the second wheels are in a second state;
FIG. 16 is a perspective view of the frame of the all-terrain vehicle with a drive motor connected on the frame.
FIG. 17 is a perspective view of a saddle support structure of the all-terrain vehicle in an embodiment of the disclosure;
FIG. 18 is a perspective view of a first power supply system of the all-terrain vehicle in an embodiment of the disclosure;
FIG. 19 is a side view of the layout of a power supply compartment;
FIG. 20 is a rear perspective view of the layout of the power supply compartment;
FIG. 21 is a side view of the layout of a first power supply relative to a drive system;
FIG. 22 is a side view of the layout of a first power supply relative to a rear rocker arm;
FIG. 23 is a rear perspective view of the saddle assembly of an all-terrain vehicle in an embodiment of the disclosure;
FIG. 24 is an exploded view of a saddle locking hook of an all-terrain vehicle in an embodiment of the disclosure;
FIG. 25 is an isometric view of a hook body of an all-terrain vehicle in an embodiment of the disclosure;
FIG. 26 is a side view of the layout of the saddle locking hook relative to the rear fender;
FIG. 27 is a perspective view of the saddle assembly of an all-terrain vehicle in an embodiment of the disclosure;
FIG. 28 is a top plan view of the layout of the saddle assembly of an all-terrain vehicle in an embodiment of the disclosure;
FIG. 29 is a rear perspective view of the saddle assembly of an all-terrain vehicle in an embodiment of the disclosure;
FIG. 30 is a side perspective view of the layout of the saddle assembly relative to the first power supply;
FIG. 31 is a side perspective view of the layout of the saddle assembly relative to the first power supply in a front-rear direction;
FIG. 32 is a side perspective view of the layout of the saddle assembly relative to the first power supply in a vertical direction;
FIG. 33 is a top plan view of a charging cover component of an all-terrain vehicle in an embodiment of the disclosure;
FIG. 34 is a sectional view of the charging cover component in a closed state;
FIG. 35 is a sectional view of the charging cover component in an open state;
FIG. 36 is a schematic diagram of the layout of a pressure sensor and a heating component in the saddle assembly of the all-terrain vehicle;
FIG. 37 is a rear perspective view from above of the saddle assembly of an all-terrain vehicle in an embodiment of the disclosure;
FIG. 38 is a schematic diagram of the layout of a display device of an all-terrain vehicle in an embodiment of the disclosure;
FIG. 39 is an isometric view of an instrument assembly and information input device of an all-terrain vehicle in an embodiment of the disclosure;
FIG. 40 is a perspective view of a parking assembly of an all-terrain vehicle in an embodiment of the disclosure;
FIG. 41 is a sectional view along a B-B direction in FIG. 40;
FIG. 42 is a schematic diagram of the layout of a brake assembly;
FIG. 43 is perspective view of a second brake assembly of an all-terrain vehicle in an embodiment of the disclosure;
FIG. 44 is a side perspective view from above of the all-terrain vehicle in an embodiment of the disclosure;
FIG. 45 is a schematic diagram of a foot brake of an all-terrain vehicle in an embodiment of the disclosure; and
FIG. 46 is a schematic diagram of the installation of tail lamps in an embodiment of the disclosure; and
FIG. 47 is a schematic diagram of a high-voltage junction unit in an embodiment of the disclosure.

### DETAILED DESCRIPTION

The following will provide a detailed description of the present invention in conjunction with the specific embodiments shown in the accompanying drawings. The scope of protection of the patent of the present invention is defined by the appended claims.

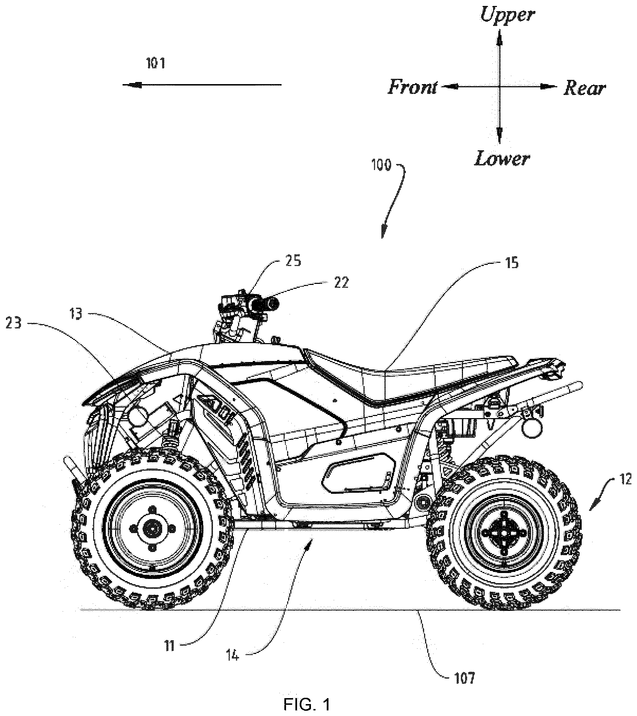

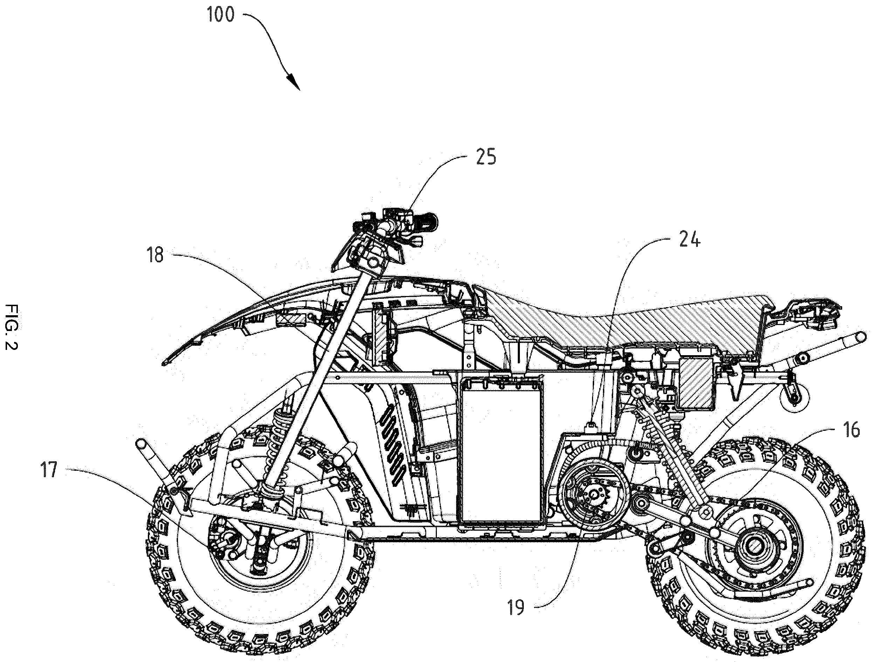

As shown in FIG. 1 to 3, an all-terrain vehicle 100 includes a frame 11, a plurality of wheels 12, a vehicle cover 13, a power supply system 14, a saddle assembly 15, a transmission assembly 16, a brake system 17, a steering assembly 18, a drive assembly 19, a plurality of lamps 21, a manipulation assembly 22, a suspension assembly 23, a control unit 24 and an instrument assembly 25. The general orientations of front, rear, up (upper), down (lower), left and right for the all-terrain vehicle are defined in FIG. 1. The frame 11 supports the vehicle cover 13. The plurality of wheels 12 are located below the frame 11 and drives the all-terrain vehicle 100 to move. The plurality of wheels 12 include two first wheels 121 used as drive wheels and two second wheels 122 used as driven wheels. Generally, the first wheels are rear wheels of the all-terrain vehicle 100 and the second wheels are front wheels of the all-terrain vehicle 100. The saddle assembly 15 is mounted above the frame 11 for driver to ride on. A power supply system 14 for providing power for the all-terrain vehicle 100 is mounted on the frame 11 below the saddle assembly 15. A drive system 19 electrically connected to the power supply system 14 is mounted on the frame 11 adjacent to the first wheels 121. The drive system 19 drives the wheels 12 to drive the all-terrain vehicle 100 to move. The drive assembly 19 drives at least one of the first wheels 121 or the second wheels 122 to provide driving force to drive the all-terrain vehicle 100 to move. A suspension system 23 is pivoted to the wheels 12 and the frame 11, respectively. A steering assembly 18 is fixedly connected to the suspension assembly 23 and pivoted to the frame 11 to control the driving direction of the all-terrain vehicle 100. The manipulation assembly 22 is mounted adjacent to the steering assembly 18 and is used to control the driving state of the all-terrain vehicle 100. The instrument assembly 25 for displaying relevant data during the running of the all-terrain vehicle 100 is mounted in a front position of the vehicle that can be seen by the user. The plurality of lamps 21 are mounted at the front end and rear end of the frame 11 to provide lighting signals. The control unit 24 controls the running status of the all-terrain vehicle 100. A ground reference plane 107 is defined as a horizontal plane where the drive wheels and the driven wheels contact the ground. A first direction 101 is defined as a direction parallel to the ground reference plane 107 and extending forward along the all-terrain vehicle 100.

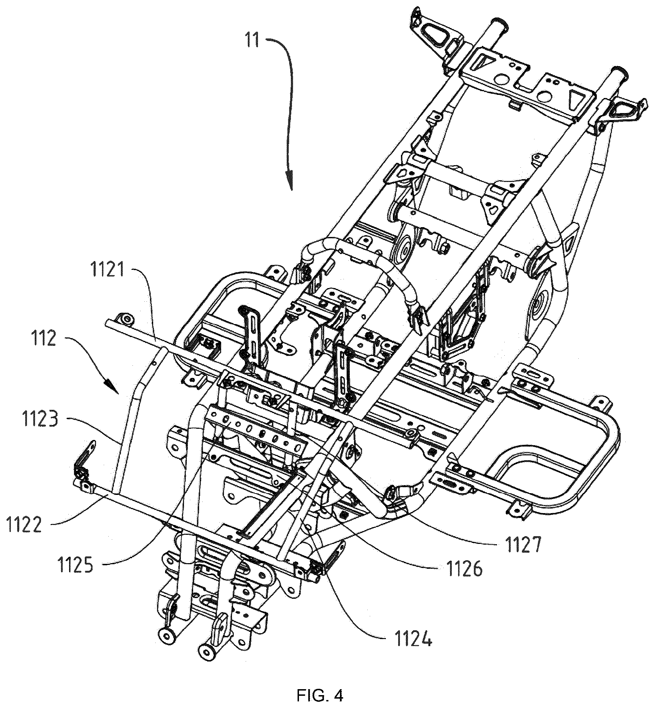

In some embodiments, as shown in FIG. 4, the frame 11 is made of metals, including a frame body 111 and a front bracket 112 fixedly connected to the front end of the frame body 111 for supporting the front end of the vehicle cover 13. The front bracket 112 includes a first cross bar 1121 mounted on the upper-front end of the frame body 111, a second cross bar 1122 mounted on the lower-front end of the frame body 111, a first bent tube 1123 and a second bent tube 1124 both between the first cross bar 1121 and the second cross bar 1122 and both matched with the shape of the front end of the vehicle cover 13. Two ends of the first bend rod 1123 are respectively welded to the first cross bar 1121 and the second cross bar 1122, and two ends of the second bend rod 1124 are respectively welded to the first cross bar 1121 and the second cross bar 1122. In this way, the first bend rod 1123, the second bend rod 1124, a portion of the first cross bar 1121 and a portion of the second cross bar 1122 cooperatively define a closed installation area, with an electrical unit mount seat 1125 arranged within the installation area for installing electrical units. The electrical unit mount seat 1125 is arranged on the first cross bar 1121 within the installation area. At least one vertical rod 1127 extending towards the ground reference plane 107 and a cable unit mount seat 1126 are also arranged on the first cross rod 1121. The cable unit mount seat 1126 is mounted below the electrical unit mount seat 1125 by the vertical rod 1127.

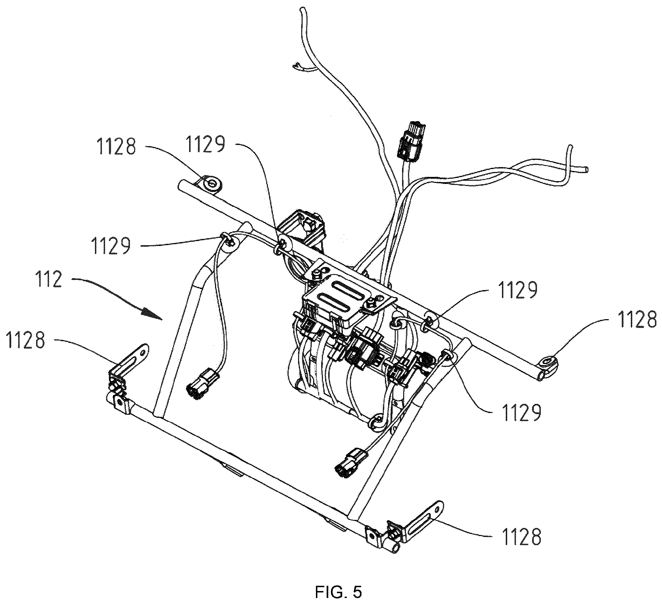

In some embodiments, as shown in FIG. 5, a plurality of cable fixing devices 1129 for fixing cables are arranged on the first cross bar 1121, the first bent tube 1123 and the second bent tube 1124 around the installation area. A plurality of mount holes 1128 are defined at two ends of the first cross bar 1121 and two ends of the second cross bar 1122. The front bracket 112 is secured to the front end of the frame body 111 by the mount holes 1128 defined at two ends of the first cross bar and two ends of the second cross bar. The front bracket 112 and the frame body 111 are designed as two split structures, which makes the transport and placement of the frame body 111 easier before the assembly of the all-terrain vehicle 100. The vehicle cover at the front end of the frame body 111 is supported by the front bracket 112, which effectively improves the support strength and avoids the collapse of vehicle cover at the front end. At the same time, the cables from the electrical unit are fixed by the cable unit mounting seat 1126, and then the cables are led out to the outside by the cable fixing device 1129, which makes the cable layout more standardized and reasonable, further improve the convenience of electrical unit maintenance.

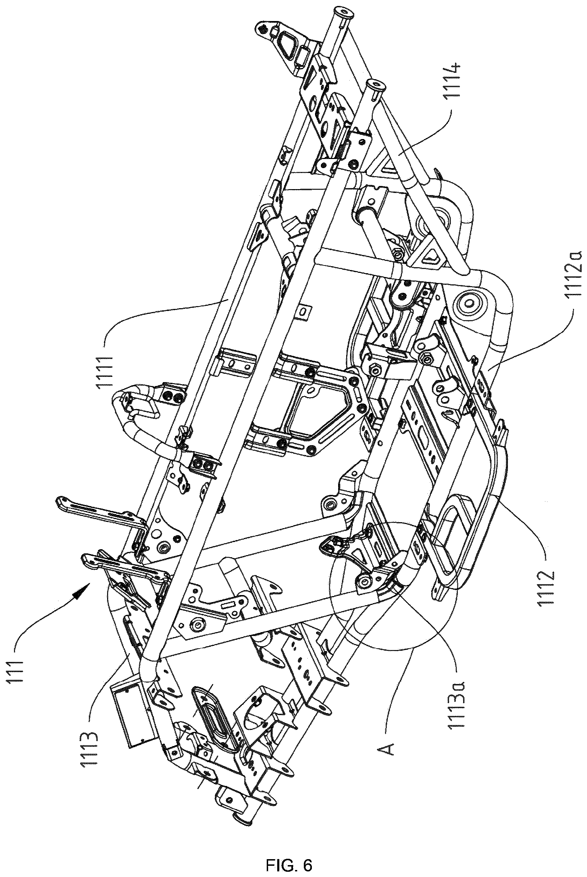

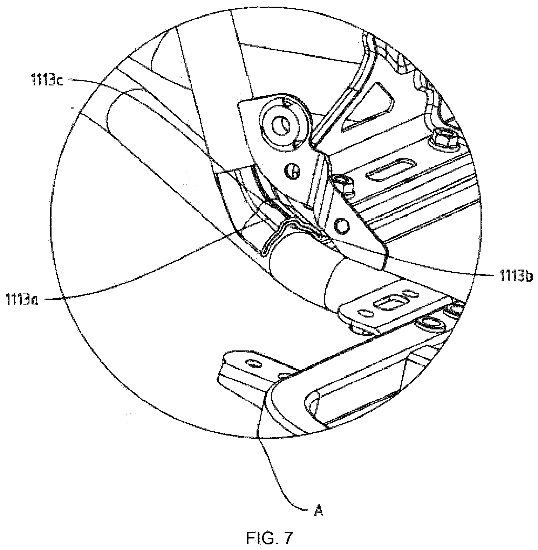

In some embodiments, as shown in FIG. 6 to FIG. 7, the frame body 111 includes a first main beam bracket 1111, a second main beam bracket 1112, a front bracket 1113 arranged at the front end of the all-terrain vehicle, and a rear bracket 1114 arranged at the rear end of the all-terrain vehicle. At least two first horizontal beam bracket 1111 are symmetrically arranged at the top of the frame body 111. At least two second horizontal beam brackets 1112 are symmetrically arranged at the bottom of the frame body 111, and the second horizontal beam brackets 1112 includes a second horizontal beam. Electrophoresis defects such as fluid accumulation, paint bumps, and sagging after electrophoresis treatment are prone to occur at the position where the front end bracket 1113 is welded to the second horizontal beams 1112a of the second main beam bracket 1112. In some embodiments, a bending section 1113a is arranged at the intersection between the front bracket 1113 and the second horizontal beams 1112a of the second main beam bracket 1112, and the bending section 1113a defines a bending angle making the bending section 1113a substantially parallel to the second horizontal beams 1112a after being connected. The bending section 1113a includes an arc-shaped surface adapted to the external shape of the second horizontal beam 1112a. The length of the arc-shaped surface is greater than the length of the connection between the bending portion 1113a and the second horizontal beam 1112a. The arc-shaped surface defines a drainage passage 1113b throughout the entire length of the arc-shaped surface. The presence of the drainage passage 1113b allows for a gap between the arc-shaped surface and the second horizontal beam 1112a when the arc-shaped surface of the bending portion 1113a contacts with the external shape of the second horizontal beam 1112a of the second main beam bracket 1112. The gap extends to the intersection of the front bracket 1113 and the second horizontal beam 1112a. The drainage passage 1113b may be either an arc-shaped passage or a square passage, and the shape of the drainage passage 1113b is not limited herein. In this way, the electrophoresis liquid at the intersection of the front bracket 1113 and the second horizontal beam 1112a is drained to the outside of the frame body 111 by the drainage passage 1113b during the electrophoresis treatment of the frame body 111, thereby avoiding electrophoresis defects (such as paint bumps, sagging and liquid accumulation in the frame body 111). A convex structure 1113c is mounted on the other side of the arc-shaped surface, rather than the side where the drainage passage 1113b is located to improve the welding strength of the front bracket 1113 and the second horizontal beam 1112a. The length of the convex structure 1113c is substantially equal to the length of the drainage passage 1113b.

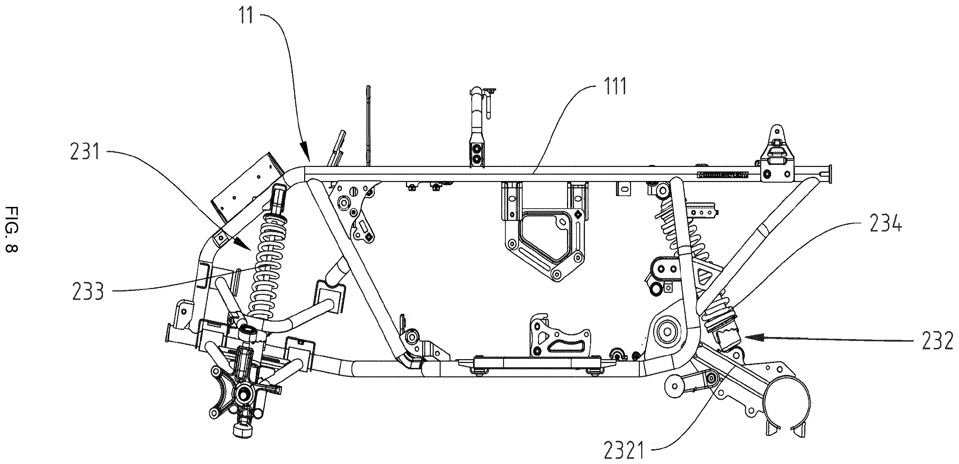

In some embodiments, as shown in FIG. 8, the suspension system 23 includes a front suspension 231, a rear suspension 232, a first shock absorber 233, and a second shock absorber 234. The suspension assembly 23 is capable of transmitting force and torque between the wheels 12 and the frame 11 and buffering impact forces from uneven surfaces over which the vehicle 100 travels to the frame 11, so as to reduce vibration, thereby ensuring that the all-terrain vehicle 100 is able to run smoothly and stably. The rear suspension 232 includes a rear rocker arm 2321, one end of the rear rocker arm 2321 is pivoted to the first wheels 121, and the other end of the rear rocker arm 2321 is pivoted to the frame body 111.

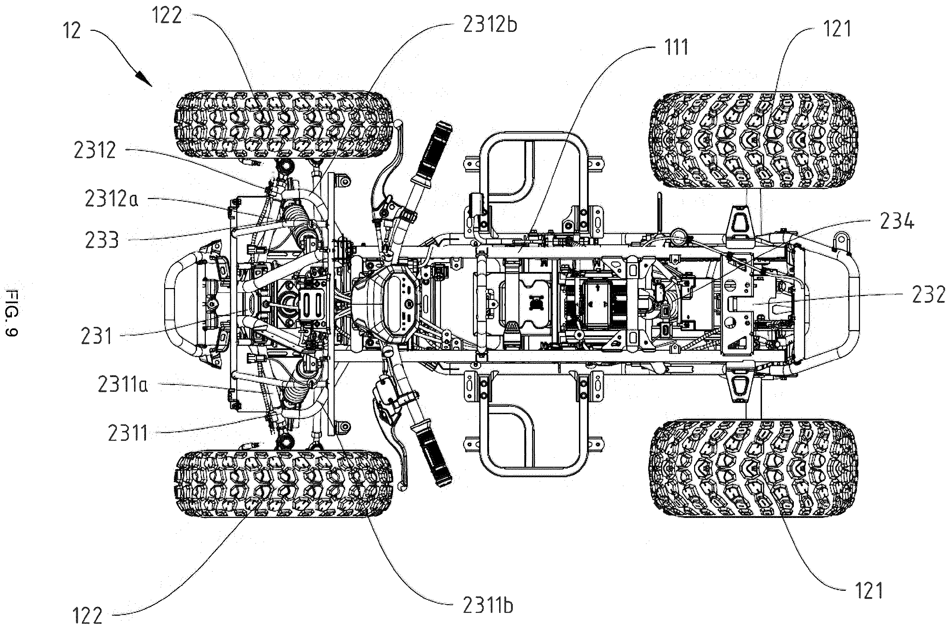

In some embodiments, as shown in FIG. 9, the front suspension 231 includes a first rocker arm assembly 2311 and a second rocker arm assembly 2312. The first rocker arm assembly 2311 and the second rocker arm assembly 2312 are both pivoted between the wheels 12 and the frame body 111. The first rocker arm assembly 2311 includes a first horizontal rocker arm 2311a pivoted between the second wheels 122 and the frame body 111 and a first curved rocker arm 2311b. One end of the first curved rocker arm 2311b is welded to the first horizontal rocker arm 2311a, and the other end of the first curved rocker arm 2311b is pivoted to the frame body 111. The second rocker arm assembly 2312 includes a second horizontal rocker arm 2312a pivoted between the second wheels 122 and the frame body 111 and a second curved rocker arm 2312b. One end of the second curved rocker arm 2312b is welded to the second horizontal rocker arm 2312a, and the other end of the second curved rocker arm 2312b is pivoted to the frame body 111.

Neither a rocker arm cross beam nor a U-shaped mounting seat on the rocker arm cross beam is arranged on the frame main body 111 due to the smaller layout space of the frame main body 111 for a small size of the all-terrain vehicle 100. A rocker arm mounting seat 2313 is welded to the frame body 111. The first rocker arm assembly 2311 and the second rocker arm assembly 2312 are both connected to the rocker arm mounting seat 2313 by pivot structures. One end of each pivot structure is adjacent to the rocker arm mounting seat 2313. A rocker arm mounting bracket 2314 is arranged at the other end of the pivot structure to connect the first rocker arm assembly 2311 and the second rocker arm assembly 2312. The first rocker arm assembly 2311 and the second rocker arm assembly 2312 are mounted between the rocker arm mounting seat 2313 and the rocker arm mounting bracket 2314 by a pivot structure without a rocker arm cross beam, which improves the connection strength between the first rocker arm assembly 2311 and the second rocker arm assembly 2312 and the frame main body 111, and effectively simplifies the arrangement of beams for the frame body 111.

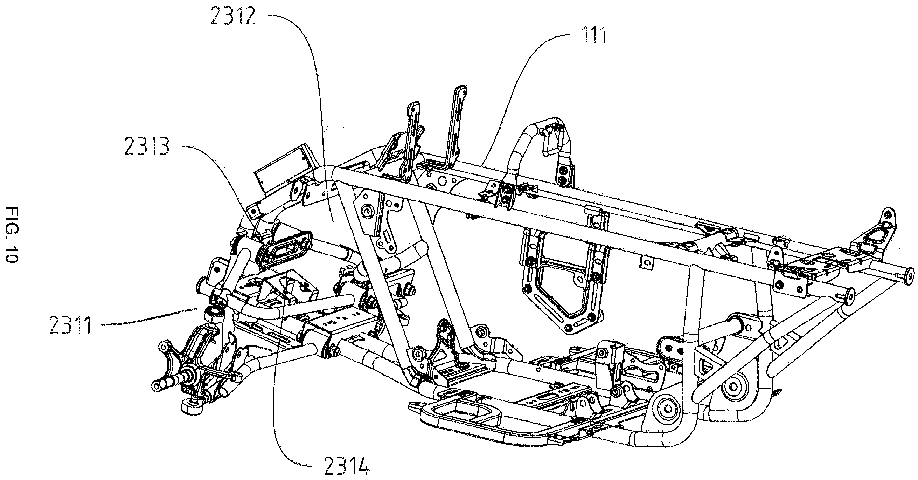

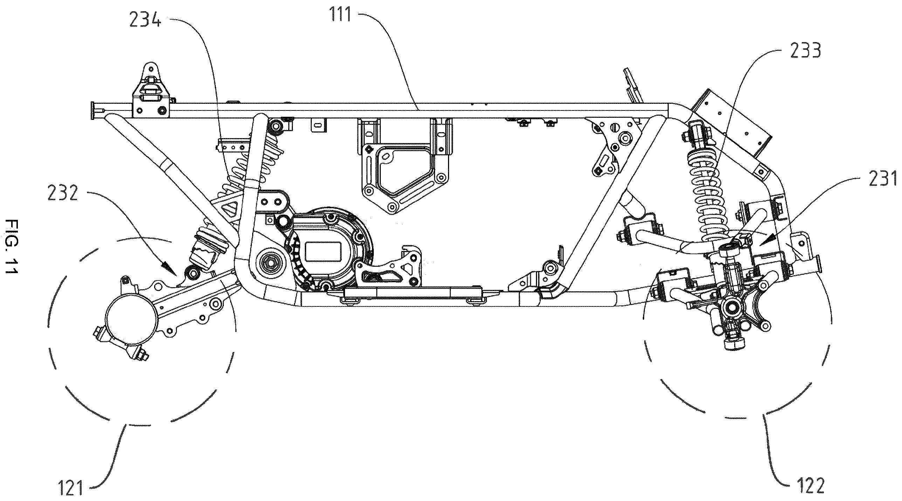

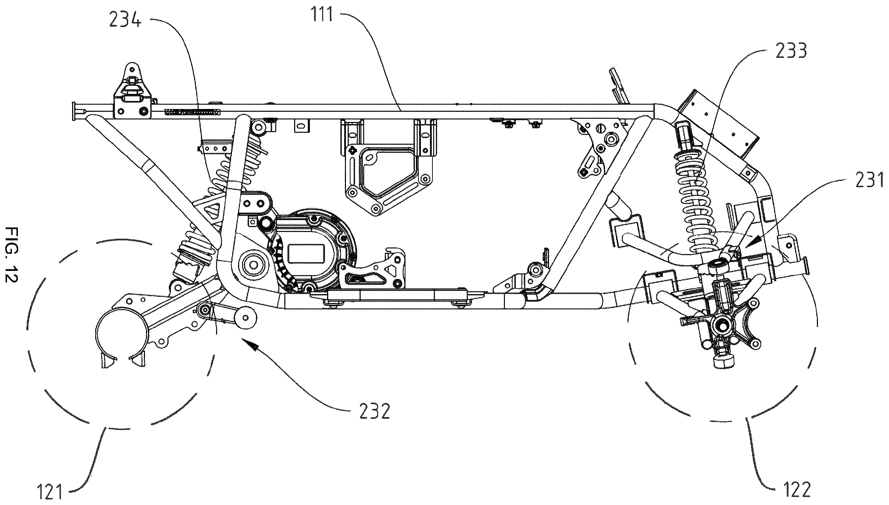

In some embodiments, as shown in FIG. 9 to FIG. 10, the first shock absorber 233 is connected to the front suspension 231, and the second shock absorber 234 is connected to the rear suspension 232. One end of the first shock absorber 233 is connected to the front end of the frame body 111, and the other end of the first shock absorber 233 is connected to the front suspension 231. One end of the second shock absorber 234 is connected to the rear end of the frame body 111, and the other end of the second shock absorber 234 is connected to the first wheels 121. The first shock absorber 233 enables the second wheels 122 to move in the direction perpendicular to the ground reference plane 107. The second shock absorber 234 enables the first wheels 121 to move in the direction perpendicular to the ground reference plane 107. The first wheels 121 and the second wheels 122 have a first wheel limit state and a second wheel limit state under the action of the first shock absorber 233 and the second shock absorber 234. The first wheels 121 and the second wheels 122 are in the first wheel limit state when the all-terrain vehicle 100 is at the maximum load capacity (as shown in FIG. 11). The first wheels 121 and the second wheels 122 are in the second wheel limit state when the all-terrain vehicle 100 is in empty state (as shown in FIG. 12).

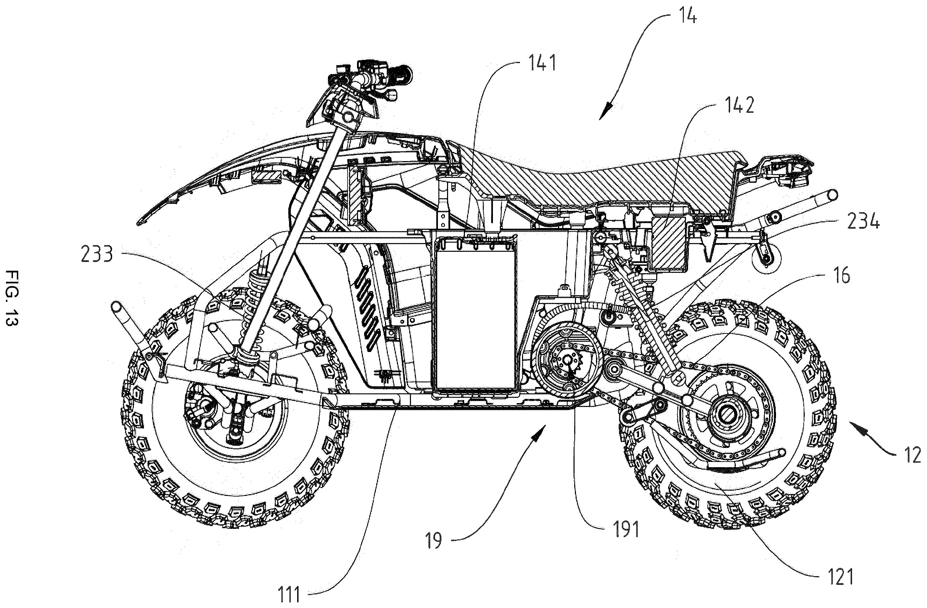

In In the main embodiments, as shown in FIG. 13, the power supply system 14 includes a first power supply assembly 141 and in some embodiments a second power supply 142. The first power supply system 141 is used to provide electric energy for the drive assembly 19 to drive the all-terrain vehicle 100. The second power supply 142 supplies power to the low-voltage consumers in the all-terrain vehicle 100. The drive system 19 includes a drive motor 191 electrically connected to the first power supply assembly 141. The drive system 19 receives electrical energy output from the first power supply assembly 141 and outputs power to the transmission assembly 16. The transmission assembly 16 is capable of receiving the power output from the drive system 19 and is capable of driving the wheels 12 to move. The transmission assembly 16 may be by a chain-driven method or a shaft-driven method. The transmission assembly 16 is capable of receiving the power generated by the drive motor 191 in the drive system 19, and is capable of transmitting the power to the first wheels 121 of the wheels 12, thereby driving the wheels to rotate and driving the all-terrain vehicle 100 to move.

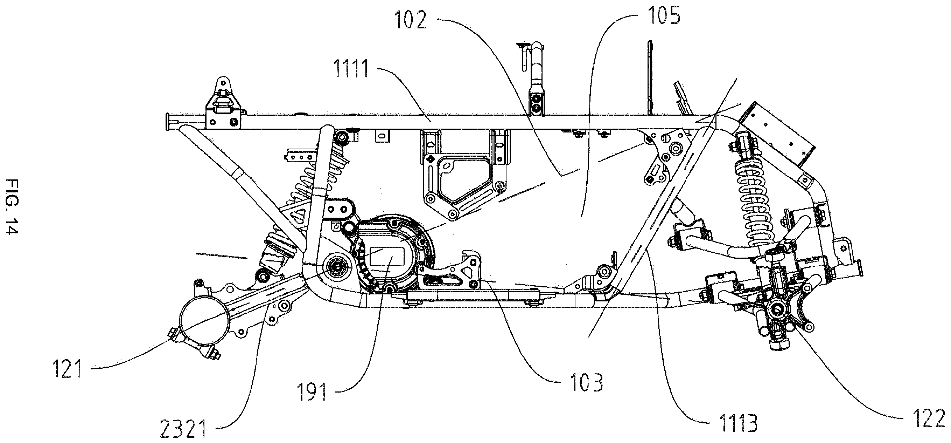

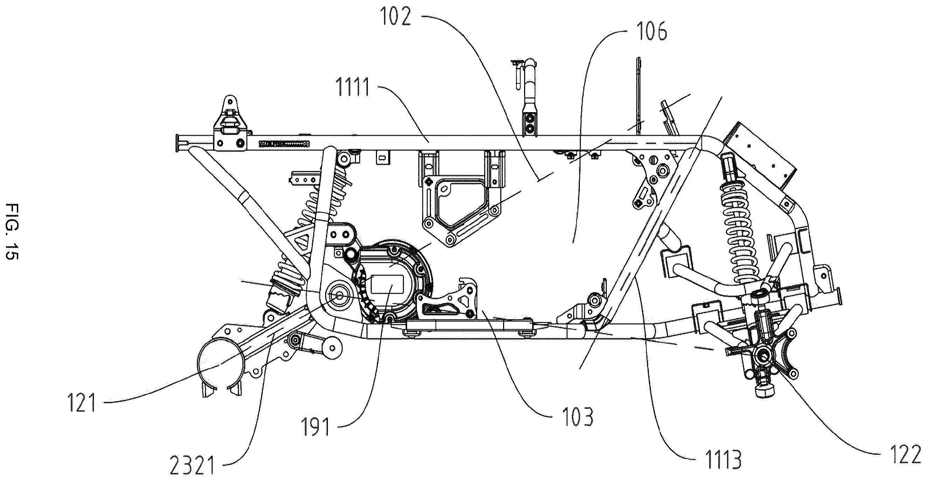

In some embodiments, as shown in FIG. 13, the drive motor 191 is mounted on the frame body 111 and is located between the first power supply assembly 141 and the first wheels 121. A second plane 110 is defined as a plane where an outer side of one of the first wheels 121 is located. The first wheels 121 and the second wheels 122 have a first wheel limit state and a second wheel limit state under the action of the first shock absorber 233 and the second shock absorber 234. The first wheels 121 and the second wheels 122 are in the first wheel limit state when the all-terrain vehicle 100 is at the maximum load capacity (as shown in FIG. 14). The first wheels 121 and the second wheels 122 are in the second wheel limit state when the all-terrain vehicle 100 is in empty state (as shown in FIG. 15). As shown in FIG. 14 or 15, within the second plane, a straight line connecting the axle center of the first wheels 121 and the pivot axis of the rear rocker arm 2321 is defined as a first straight line 102, and the straight line connecting the axis of the second wheels 122 and the pivot axis of the rear rocker arm 2321 is defined as a second straight line 103. As shown in FIG. 14, the first straight line 102, the second straight line 103, the first main beam bracket 1111, and the front bracket 1113 cooperatively define a first area 105, and the axis of the drive motor 191 is located within the first area 105 when the wheels (the rear wheels 121 and the second wheels 122) are in the first state. As shown in FIG. 15, the first straight line 102, the second straight line 103, the first main beam bracket 1111, and the front bracket 1113 cooperatively define a second area 106, and the axis of the drive motor 191 is located within the second area 106 when the wheels (the rear wheels 121 and the second wheels 122) are in the second state. In this embodiment, the area of the first area 105 is greater than the area of the second area 106. The drive motor 191 is arranged between the first power supply assembly 141 and the first wheels 121, improving the starting torque of the all-terrain vehicle 100 and increasing the backup power of the all-terrain vehicle 100. The backup power refers to a maximum output power that the drive motor 191 may increase to further overcome the slope resistance and acceleration resistance when the all-terrain vehicle 100 is running at a constant speed on a flat and straight road. The layout of the drive motor 191 does not require a drive motor 191 with a high power output, so a lower power drive motor 191 may be selected, thereby saving the production cost of all-terrain vehicle 100.

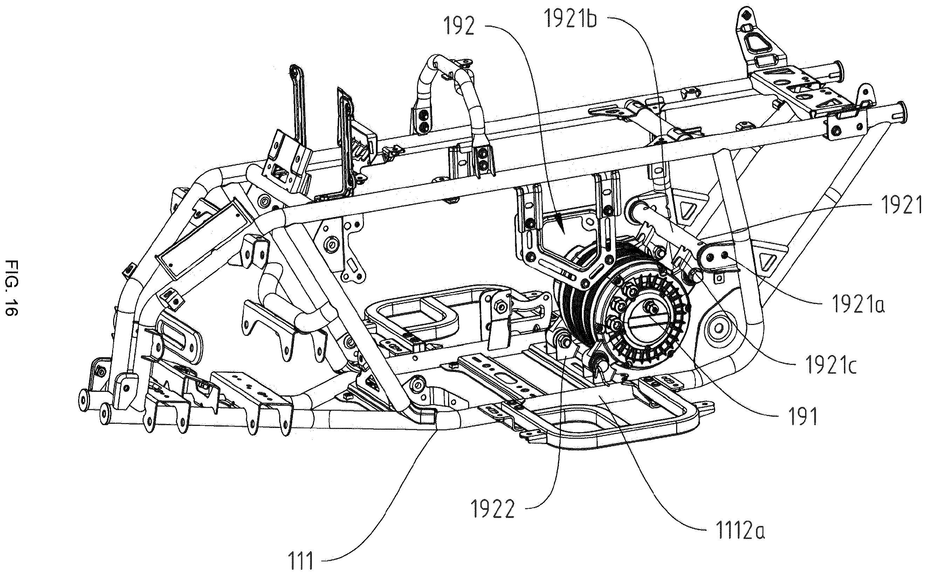

In some embodiments, as shown in FIG. 16, the drive motor 191 is mounted on the frame body 111, and is connected to the frame body 111 by the drive motor support cradle 192. The drive motor support cradle 192 includes a first drive motor mount rack 1921 and a second drive motor mount rack 1922. The first drive motor mount rack 1921 includes a drive motor mounting bracket 1921a and an intermediate connection bracket 1921b, and the drive motor mounting bracket 1921a is welded to the frame body 111. In some embodiments, the first drive motor mount rack 1921 includes two drive motor mounting brackets 1921a that are plate-type structures, and the intermediate connection bracket 1921b is mounted between the drive motor mounting brackets 1921a by bolts. A drive motor fixing bracket 1921c is arranged on the intermediate connection bracket 1921b. A second drive motor mount rack 1922 is welded to the second horizontal beam 1112a of the second main beam bracket 1112. The drive motor 191 is mounted on the frame body 111 by the drive motor fixing bracket 1921c and the second drive motor mount rack 1922. The first drive motor mount rack 1921 is designed as a detachable structure, which is convenient to mounting and dismounting the drive motor 191 when the interior space of the small all-terrain vehicle 100 is limited.

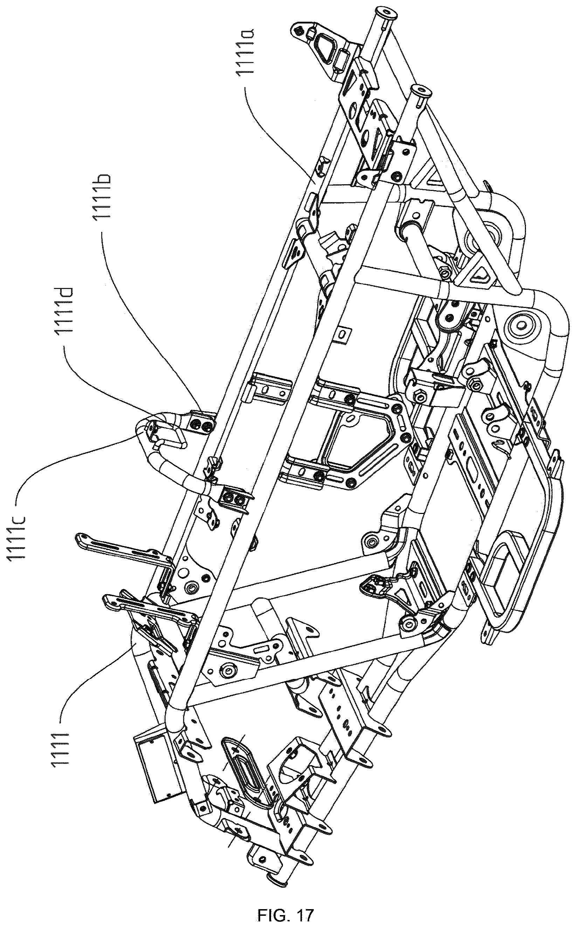

In some embodiments, as shown in FIG. 17, the first main beam bracket 1111 includes two horizontal beams 1112a. A saddle support base 1111b is arranged on each first horizontal beam 1112a, and the saddle support beam 1111c is mounted to the first horizontal beam 1112a by the saddle support base 1111b. A saddle stopper 1111d is arranged on the saddle support beam 1111c. The saddle stopper 1111d may be U-shaped, or the saddle stopper 1111d and the saddle support beam 1111c may cooperatively form an O-shaped limit device. The O-shaped limit device limits the movement of the saddle assembly 15 on the saddle support beam 1111c along the first direction 101 when the saddle assembly 15 is mounted on the saddle support beam 1111c. The saddle support beam 1111c and the frame body 111 are designed as two split structures, which is more conducive to the stacking and storage of the frame body 111 and reduces the occupied space of the frame body 111.

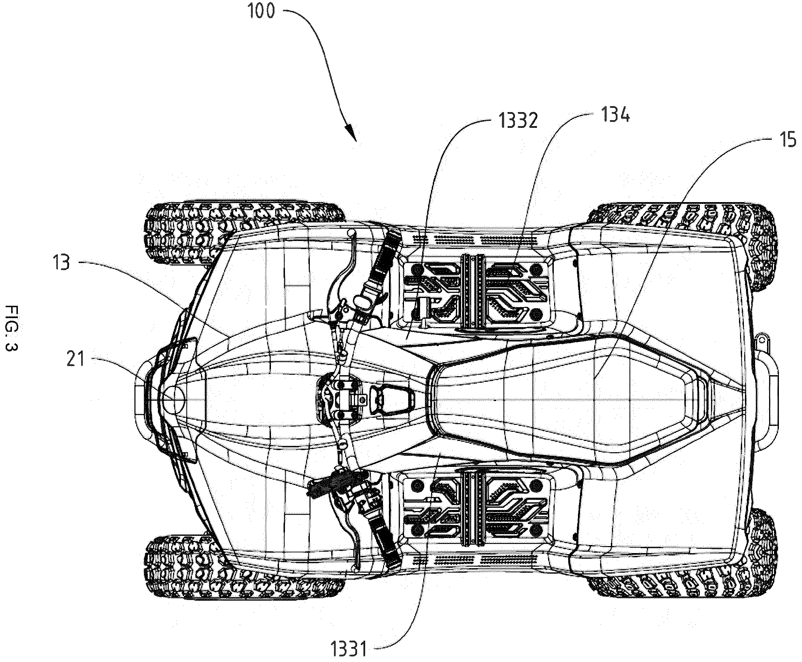

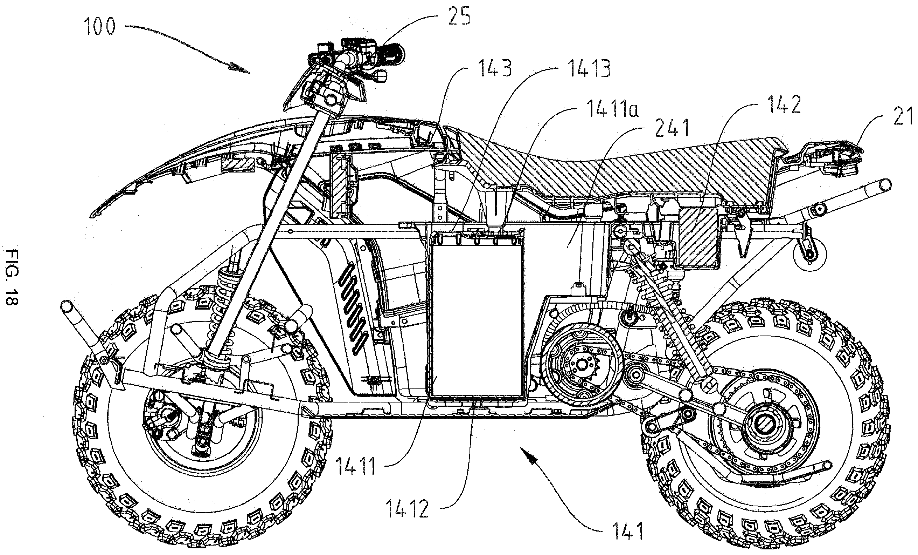

In the main embodiments, as shown in FIG. 18, the first power assembly 141 includes a first power supply 1411, and in some embodiments, the first power assembly 141 includes a power supply compartment 1412 for accommodating the first power supply 1411, and a charging device 1413 for supplementing the first power supply 1411. As the energy storage and power supply unit of the all-terrain vehicle 100, the first power supply 1411 is used to store the electric energy required for the running of the all-terrain vehicle 100 and provide electric energy for the running of the all-terrain vehicle 100, so it is also called as a main power supply. The power supply compartment 1412 is used to accommodate the first power supply 1411 and also to protect the first power supply 1411 from damage. The charging device 1413 is used to transmit the electric energy outside the all-terrain vehicle 100 to the first power supply 1411 to supply the electric power for the first power supply 1411. The second power supply 142 is used to supply electric power to low-voltage equipment such as the lamps 21, the instrument assembly 25, a horn, an alarm unit, the motor control unit 241, and the like. In some embodiments, the power supply compartment 1412 is arranged on the frame 11. The power supply compartment 1412 is arranged between a left guard board 1331 (as shown in FIG. 3) and a right guard board 1332 (as shown in FIG. 3). The internal size of the power supply compartment 1412 is greater than or equal to the size of the first power supply 1411. The first power supply 1411 is placed within the power compartment 1412. One end of the charging device 1413 is connected to the charging interface 1411a of the first power supply 1411, and the other end is arranged in a charging port 143 of the front fender 131. For electrically driven vehicles, the first power supply 1411 is a very important component, which provides all the required electrical energy for the vehicles. Moreover, the first power supply 1411 is generally relatively heavy due to the requirement of large endurance and accounts for a considerable portion of the weight and cost of the electrically driven all-terrain vehicle 100. Therefore, the first power supply 1411 plays an important role in both the value and the importance of the all-terrain vehicle 100. In addition, the first power supply 1411 currently and most commonly used in electrically driven vehicles, is a lithium-ion battery, and lithium-ion batteries generally have safety issues that are difficult to solve. Therefore, necessary protective measures need to be taken for the first power supply 1411. The power supply compartment 1412 is designed for accommodating the first power supply 1411 and limiting its movement, so as to ensure that the first power supply 1411 will not move in the frame 11 during driving, which can avoid the problem of unstable center of gravity of the all-terrain vehicle 100 caused by the weight distribution of the first power supply 1411 or the potential safety hazard caused by the damage of the first power supply 1411. In addition, the power compartment 1412 can avoid directly fixing the first power supply 1411 on the frame 11, which is convenient to disassembly of and replacement of the first power supply 1411 and off -board charge of the first power supply 1411. The power supply compartment 1412 can also protect the first power supply 1411 from collision, thereby avoiding potential safety hazards. Moreover, the power supply compartment 1412 isolates the first power supply 1411 from other equipment of the all-terrain vehicle 100, which can reduce the damage of the first power supply 1411 to other equipment of the all-terrain vehicle 100 when the first power supply 1411 is damaged. The power compartment 1412 can also serve to isolate the first power supply 1411 from the driver, allowing the driver sufficient escape time in the event of extreme danger of damage to the first power supply 1411. The power supply system 14 includes a charging device 1413 connected to the charging interface 1411a of the first power supply 1411, which can realize the on-board charging of the first power supply 1411 without dismantling the first power supply 1411, reduce the installation and disassembly frequency of the first power supply 1411, and improve the use convenience of the all-terrain vehicle 100.

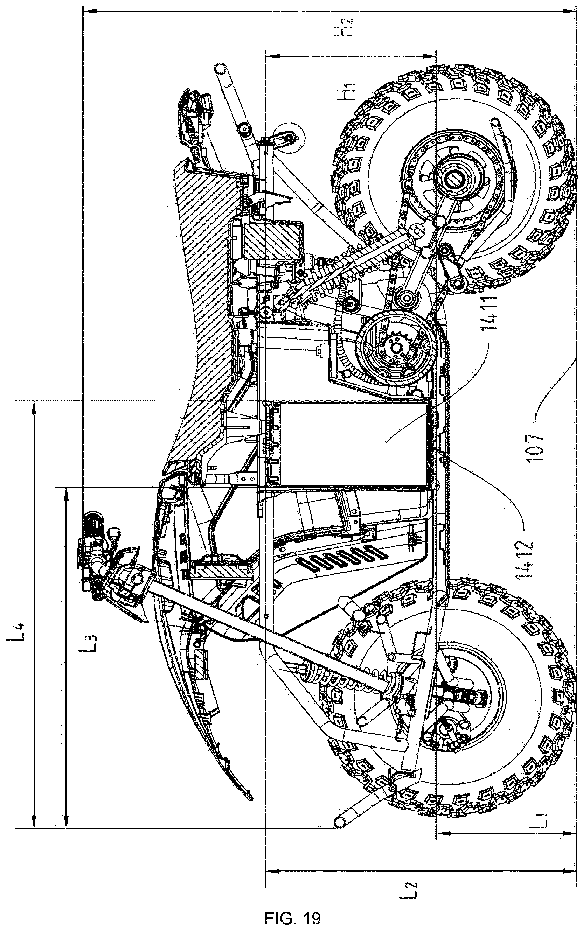

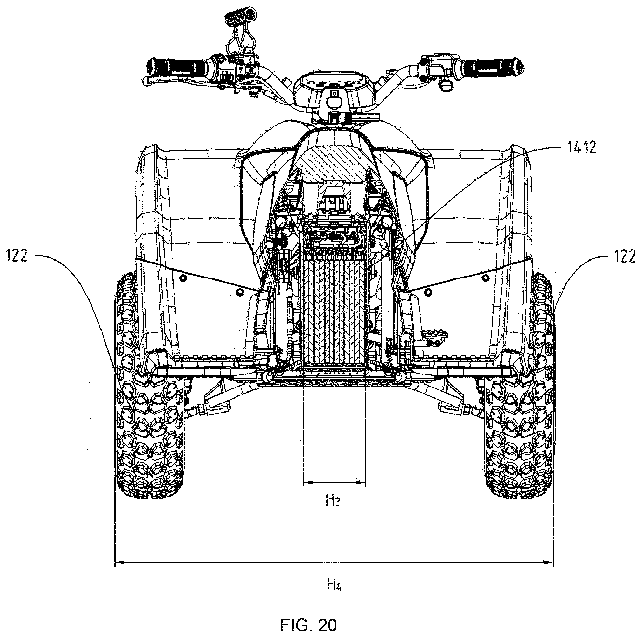

In some embodiments, as shown in FIG. 19, the power supply compartment 1412 is located in the middle of the bottom of frame 11. A vertical distance from the bottom of the power supply compartment 1412 to the ground reference plane 107 is defined as L1, and L1 is in the range from 200 mm to 300 mm. A vertical distance from the top of the power supply compartment 1412 to the ground reference plane 107 is defined as L2, and L2 is in the range from 500 mm to 750 mm. The height of the power supply compartment 1421 is defined as H1 and the height of the all-terrain vehicle 100 is defined as H2. The ratio of H1 to H2 is in the range from 0.3 to 0.45. A distance along the first direction 101 from the front edge of the power supply compartment 1412 to the front edge of the all-terrain vehicle 100 is defined as L3, and L3 is in the range from 485 mm to 735 mm. A distance along the first direction 101 from the rear edge of the power supply compartment 1412 to the rear edge of all-terrain vehicle 100 is defined as L4, and L4 is in the range from 810 mm to 1220 mm. As shown in FIG. 20, the width of the power supply compartment 1412 is defined as H3, and a distance between the outer edges of the two rear wheels is defined as H4. The ratio of H3 to H4 is in the range from 0.21 to 0.33. In the electrically driven all-terrain vehicle 100, the first power supply 1411 accounts for a high proportion of the weight of all-terrain vehicle 100, and the position of the first power supply 1411 has a greater impact on the center of gravity of all-terrain vehicle 100. The first power supply 1411 is placed within the power supply compartment 1412, and the position of the power supply compartment 1412 also determines the installation position of the first power supply 1411 in the all-terrain vehicle 100. In addition to the first power supply 1411, the drive motor 191 also accounts for a relatively high proportion in the weight of the all-terrain vehicle 100. In order to facilitate the drive of the all-terrain vehicle 100, the drive motor 191 is mostly located at the rear of the all-terrain vehicle 100. Therefore, in order to balance the weight of the all-terrain vehicle 100, the first power supply 1411 and the power supply compartment 1412 need to be set slightly close to the front of the all-terrain vehicle 100, so that the center of gravity of all-terrain vehicle 100 can be located at the center of all-terrain vehicle 100. In addition, the height of the power supply compartment 1412 is limited, so that the center of gravity of the all-terrain vehicle 100 is at a lower position, and ensure that the all-terrain vehicle 100 is not prone to rollover during running. Further, a vertical distance from the bottom of the power supply compartment 1412 to the ground reference plane 107 is defined as L1, and L1 is in the range from 230 mm to 285 mm. A vertical distance from the top of the power supply compartment 1412 to the ground reference plane 107 is defined as L2, and L2 is in the range from 560 mm to 690 mm. The height of the power supply compartment 1421 is defined as H1 and the height of the all-terrain vehicle 100 is defined as H2. The ratio of H1 to H2 is in the range from 0.35 to 0.43. A distance along the first direction 101 from the front edge of the power supply compartment 1412 to the front edge of the all-terrain vehicle 100 is defined as L3, and L3 is in the range from 550 mm to 670 mm. A distance along the first direction 101 from the rear edge of the power supply compartment 1412 to the rear edge of all-terrain vehicle 100 is defined as L4, and L4 is in the range from 920 mm to 1120 mm. The width of the power supply compartment 1412 is defined as H3, and a distance between the outer edges of the two front wheels is defined as H4. The ratio of H3 to H4 is in the range from 0.24 to 0.30. Further, the position of the power supply compartment 1412 is limited, so that the center of gravity of the all-terrain vehicle 100 can be located at the center of the all-terrain vehicle 100, and increase the stability of the all-terrain vehicle 100 during driving. Further, A vertical distance from the bottom of the power supply compartment 1412 to the ground reference plane 107 is defined as L1, and L1 is in the range from 245 mm to 275 mm. A vertical distance from the top of the power supply compartment 1412 to the ground reference plane 107 is defined as L2, and L2 is in the range from 590 mm to 660 mm. The height of the power supply compartment 1421 is defined as H1 and the height of the all-terrain vehicle 100 is defined as H2. The ratio of H1 to H2 is in the range from 0.37 to 0.41. A distance along the first direction 101 from the front edge of the power supply compartment 1412 to the front edge of the all-terrain vehicle 100 is defined as L3, and L3 is in the range from 580 mm to 640 mm. A distance along the first direction 101 from the rear edge of the power supply compartment 1412 to the rear edge of all-terrain vehicle 100 is defined as L4, and L4 is in the range from 970 mm to 1070 mm. The width of the power supply compartment 1412 is defined as H3, and a distance between the outer edges of the two front wheels is defined as H4. The ratio of H3 to H4 is in the range from 0.25 to 0.29. Further, the position of the power supply compartment 1412 is limited, so that the center of gravity of the all-terrain vehicle 100 can be located at the center of the all-terrain vehicle 100, and increase the stability of the all-terrain vehicle 100 during driving and avoid rollover. In some embodiments, a projection of the first power supply 1411 projected on the ground reference plane 107 is defined as a first projection. A projection of the drive motor 1411 projected on the ground reference plane 107 is defined as a second projection. A projection of the saddle assembly 1411 projected on the ground reference plane 107 is defined as a third projection. The first projection has a smaller area than the third projection, and the second projection has a smaller area than the third projection. Both the first projection and the second projection planes are located in the third projection. A front-most endpoint of the third projection along the first direction 101 is located on the front edge of the first projection along the first direction 101. The power supply compartment 1412 and the drive motor 191 are both located in the frame 11 below the saddle assembly 15. In some embodiments, the first power supply 1411 located below the front end of the saddle assembly 15. Therefore, the disassembly of saddle assembly 15 is easier compared with the front fender 131, rear fender 132, left fender 1331 and right fender 1332 on the all-terrain vehicle 100. For components such as the first power supply 1411 that require frequent disassembly and removal, the first power supply 1411 being arranged below the saddle assembly 15 can facilitate disassembly and removal of the first power supply 1411. That is to say, when the first power supply 1411 needs to be removed, simply remove the saddle assembly 15 to easily remove the first power supply 1411. After the first power supply 1411 is removed, operations including replacing the first power supply 1411 or performing off-board charging on the removed first power supply 1411 can be carried out.

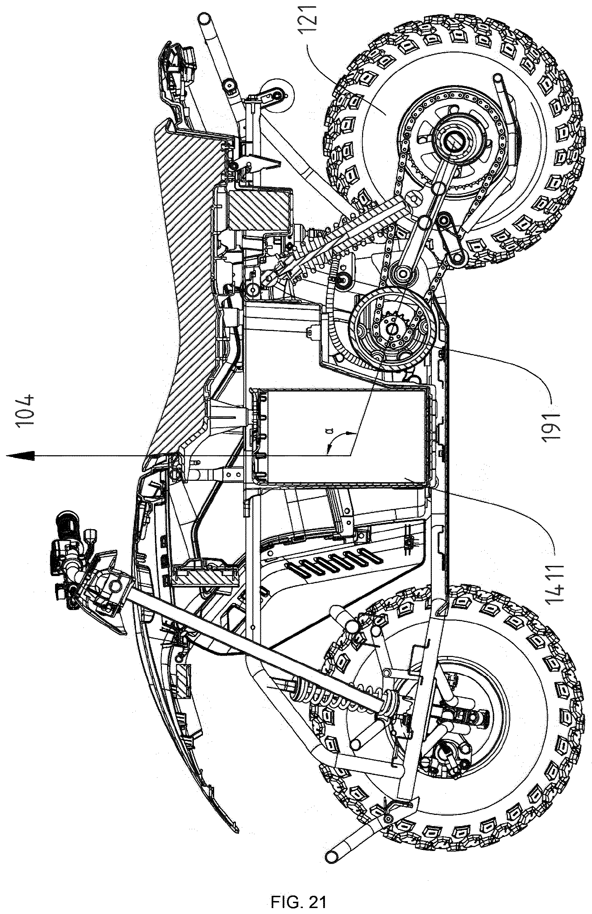

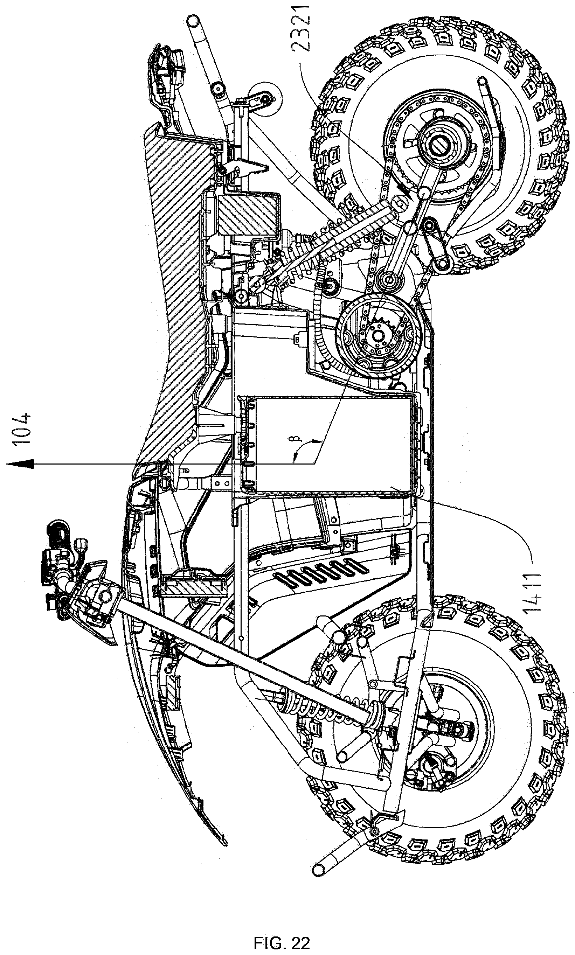

In some embodiments, as shown in FIG. 21, the height direction of the first power supply 1411 is defined as a fourth direction 104, which is perpendicular to the bottom of the first power supply 1411 and extends substantially in an upper-lower direction. A vertical projection plane is defined as a plane perpendicular to a left-right direction (for example, a plane where the view of FIG. 21 is located). A projection of an output shaft of the drive motor 191 projected on the vertical projection plane along the left-right direction is defined as a first center point. A projection of an axis of the first wheels 121 projected on the vertical projection plane is defined as a second center point. On the vertical projection plane, an angle between a straight line connecting the first center point and the second center point and the height direction 104 is defined as an angle α (as shown in FIG. 21), and the angle α is in the range from 90°to 120°. An angle between the height direction 104 and a projection of the rear rocker arm 2321 projected on the vertical projection plane is defined as angle β (as shown in FIG. 22), and the angle β is in the range from 90° to 135°. In electrically driven vehicles, the weight of the first power supply 1411 accounts for a large portion of the weight of the all-terrain vehicle 100. The position of the first power supply 1411 seriously affects the weight distribution and center of gravity position of the all-terrain vehicle 100. The drive motor 191 and the drive shaft also account for a considerable portion of the weight of the all-terrain vehicle 100. The position relationship between the first power supply 1411, the drive motor 191 and the drive shaft has a greater impact on the center of gravity of the all-terrain vehicle 100. The position relationship between the first power supply 1411, the drive motor 191 and the drive shaft are limited to make the center of gravity of the all-terrain vehicle 100 in an appropriate position. If the angle α is too small, although the center of gravity of the all-terrain vehicle 100 can be reduced, the position of the drive shaft and the drive motor 191 will be higher, which will reduce the ground clearance of the all-terrain vehicle 100 and affect the trafficability of the all-terrain vehicle 100. If the angle α is less than 90°, ie. the drive motor 191 is lower than the drive shaft, which seriously affects the ground clearance of the all-terrain vehicle 100. In this case, in order to obtain the same ground clearance, larger wheels are required, which has a significant impact on the performance of the all-terrain vehicle 100. However, if the angle α is too large, making the center of gravity of the all-terrain vehicle higher, which affects its stability during running. Furthermore, in order to better control the influence of the first power supply 1411, the drive motor 191 and the drive shaft on the center of gravity of the all-terrain vehicle 100, an angle between a line connecting the first center point and the second center point on the vertical projection plane and a projection line of the first power supply 1411 along its height direction 104 projected on the vertical projection plane is defined as angle α, and the angle α is in the range from 95°to 115°. An angle between the projection line of the first power supply 1411 along its height direction 104 projected on the vertical projection plane and a projection of the rear rocker arm 2321 projected on the vertical projection plane is defined as angle β, and the angle β is in the range from 100° to 125°. Furthermore, in order to control the position relationship between the first power supply 1411, the drive motor 191 and the drive axle to be the position most superior to the setting of the center of gravity of the all-terrain vehicle 100, an angle between a line connecting the first center point and the second center point on the vertical projection plane and a projection line of the first power supply 1411 along its height direction 104 projected on the vertical projection plane is defined as angle α, and the angle α is in the range from 100°to 110°. An angle between the projection line of the first power supply 1411 along its height direction 104 projected on the vertical projection plane and a projection of the rear rocker arm 2321 projected on the vertical projection plane is defined as angle β, and the angle β is in the range from 110° to 115°.

In some embodiments, the saddle assembly 15 has a first saddle state and a second saddle state. The saddle assembly 15 is locked onto frame 11 and cannot move relative to frame 11 when the saddle assembly 15 is in the first saddle state. The saddle assembly 15 will not separate from the frame 11, especially during running, thereby ensuring the safety of the driver. The locking state between the saddle assembly 15 and the frame 11 is released, and the saddle assembly 15 can move relative to frame 11 when the saddle assembly 15 is in the second saddle state. For example, the saddle assembly 15 can removed from frame 11. After removing the saddle assembly 15, the first power supply 1411, drive motor 191, and other components below saddle assembly 15 are exposed outside. Users can take out the first power supply 1411 from the power supply compartment 1412 as needed, replace or repair other components located under the saddle assembly 15, or remove articles placed in the storage space under the saddle assembly 15. After the first power supply 1411 is removed from the power supply compartment 1412, further processing can be carried out on the first power supply 1411, such as replacing the first power supply 1411 or conducting off-board charging on the first power supply 1411.

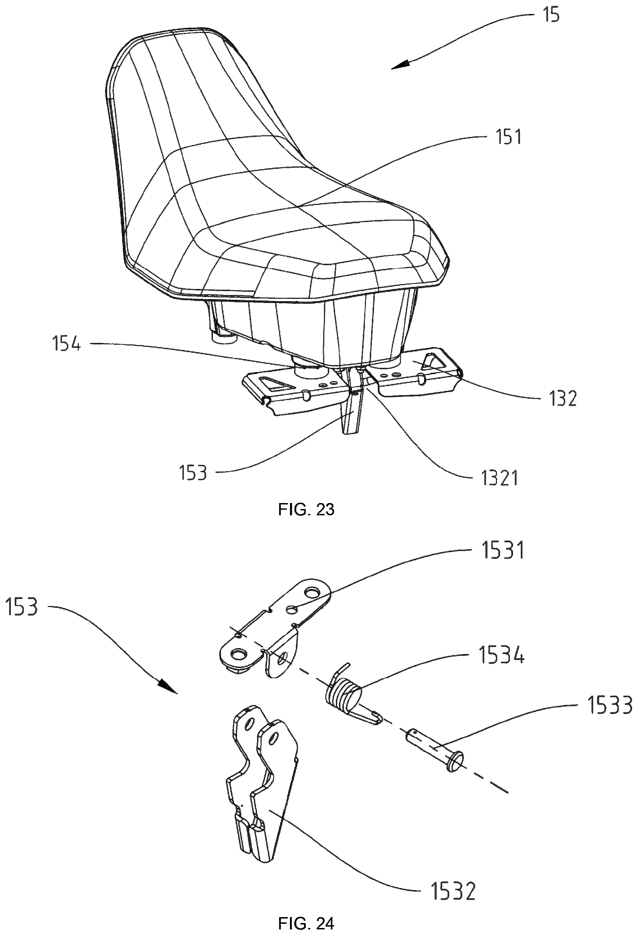

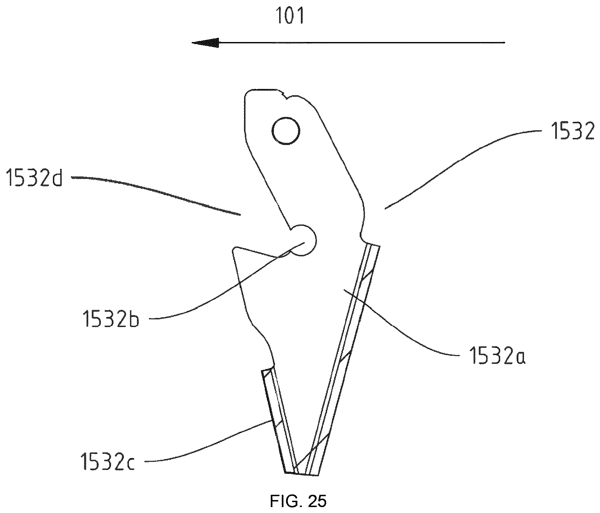

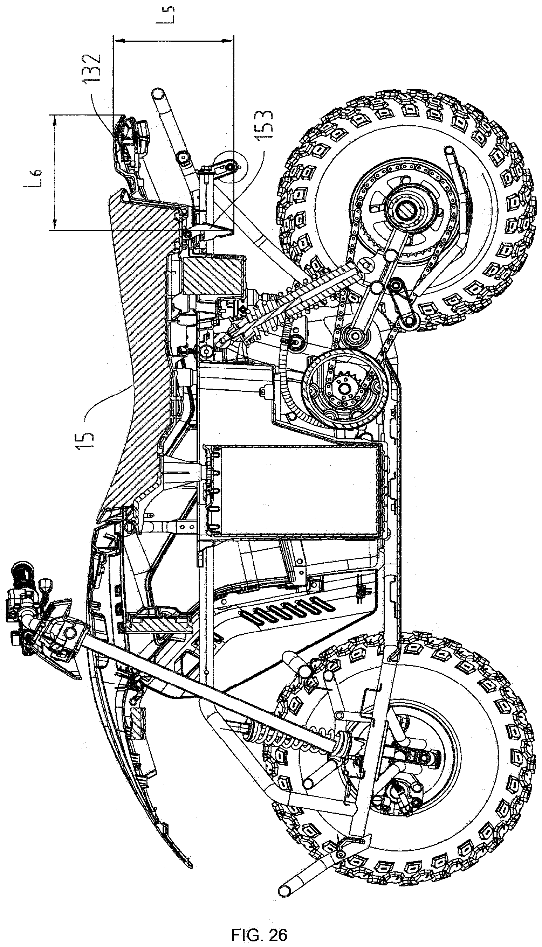

In some embodiments, as shown in FIG. 23, the saddle assembly 15 includes a saddle 151 and a saddle locking hook 153 located at the bottom of the saddle 151. The saddle assembly 15 is locked to the frame 11 by the saddle locking hook 153 when saddle assembly 15 is in the first saddle state. As shown in FIG. 23, the saddle locking hook 153 passes through a lock opening 1321 on the rear fender 132, connecting the saddle assembly 15 to the limit device mounted on the frame 11, thereby fixing the saddle assembly 15 to the frame 11. The saddle locking hook 153 is secured below the rear fender 132, which can better utilize the space below the rear fender 132 and save space below the saddle, leaving corresponding space for arranging other components. In addition, the saddle locking hook 153 is fixed below the rear fender 132 to facilitate the unlocking of saddle assembly 15, which solves the problems of difficult unlocking when the saddle locking hook 153 is fixed in the space of the lower frame 11 of the saddle assembly 15 and requiring special unlocking structures to occupy too much space. The saddle locking hook 153 is secured at the bottom of the saddle 151. As shown in FIG. 24, the saddle locking hook 153 includes a hook mounting base 1531 fixed at the bottom of the saddle 151, a lock hook 1532 for locking and unlocking the saddle 151, a pin shaft 1533, and a hook torsion spring 1534. The lock hook 1532 is rotatably fixed to the hook mounting base 1531 by the hook torsion spring 1534 and the pin shaft 1533. The frame 11 below the rear fender 132 is equipped with a limit device that is matched with the saddle locking hook 153. The saddle locking hook 153 on the saddle assembly 15 passes through the lock opening 1321 on the rear fender 132 and is locked together with the limit device under the action of the hook torsion spring 1534, thereby fixing the saddle assembly 15 to the frame 11. As shown in FIG. 25, the lock hook 1532 includes a hook body 1532a, a locking groove 1532b arranged on the hook body 1532a, and an operation section 1532c arranged on the hook body 1532a for the driver to toggle and unlock. The orientation of the locking groove opening 1532d is along the first direction 101, the operation section 1532c is arranged below the locking groove 1532b, and the operation section 1532c is arranged on the same side of the locking groove opening 1532d. The saddle locking hook 153 is unlocked by the driver manually moving the operation section 1532c of the lock hook 1532 in the opposite direction to the first direction 101. This outward unlocking operation is in line with the operating habits of the vast majority of humans, which can save the unlocking process and increase convenience, making it easier to implement unlocking operations. When the saddle is in the first saddle state, as shown in FIG. 26, the saddle assembly 15 is locked to frame 11. The maximum vertical distance from the bottom of saddle locking hook 153 to the rear fender 132 is defined as L5, and the L5 is in the range from 80 mm to 320 mm. The horizontal distance from the saddle locking hook 153 and the tail edge of the rear fender 132 is defined as L6, and the L6 is in the range from 0 mm to 500 mm. When the saddle assembly 15 is in the first saddle state, the driver can easily reach the position of the saddle hook 153 below the rear fender 132 by hand behind the all-terrain vehicle 100, and unlock the saddle hook 153 by manually dialing the saddle locking hook 153, thus unlocking the saddle assembly 15. At the same time, there is a certain distance from the saddle locking hook 153 to the edge of the rear fender 132. The saddle locking hook 153 is located below the rear fender 132, which can be protected by the rear fender 132 and is not prone to collision damage. At the same time, in the first saddle state, the saddle locking hook 153 is located below the rear fender 132. The position where the saddle locking hook 153 is located during running is difficult to be touched by the driver. Therefore, the probability of the saddle locking hook 153 being touched during the running of the all-terrain vehicle 100 is extremely low, and the probability of the saddle locking hook 153 being unlocked is relatively low, reducing the risk of accidentally touching the saddle locking hook 153 to open the saddle locking hook 153 during the running of the all-terrain vehicle 100, thereby improving safety. In a preferred embodiment, when the saddle assembly is in the first saddle state, the saddle assembly 15 is locked to frame 11. The maximum vertical distance from the bottom of saddle locking hook 153 to the rear fender 132 is defined as L5, and the L5 is in the range from 100 mm to 300 mm. The horizontal distance from the saddle locking hook 153 and the tail edge of the rear fender 132 is defined as L6, and the L6 is in the range from 50 mm to 450 mm. In order to better ensure the convenience of unlocking the saddle and protect the saddle locking hook 153, the relative position of the saddle locking hook 153 and the rear fender 132 is further limited. In a preferred embodiment, when the saddle assembly is in the first saddle state, the saddle assembly 15 is locked to frame 11. The maximum vertical distance from the bottom of saddle locking hook 153 to the rear fender 132 is defined as L5, and the L5 is in the range from 150 mm to 250 mm. The horizontal distance from the saddle locking hook 153 and the tail edge of the rear fender 132 is defined as L6, and the L6 is in the range from 100 mm to 400 mm. In order to better ensure the convenience of unlocking the saddle and protect the saddle locking hook 153, the relative position of the saddle locking hook 153 and the rear fender 132 is further limited.

In some embodiments, a plurality of saddle buffers 154 (as shown in FIG. 23) are arranged between the saddle 151 and the rear fender 132. The saddle buffers 154 are located at the bottom of the saddle 151 and on both sides of the saddle locking hook 153. The saddle buffer 154 may be a rubber buffer or a spring buffer. The saddle buffer 154 is at least partially compressed when the saddle assembly 15 is in the first saddle state. The saddle assembly 15 is unlocked frequently, and has a certain weight. It may have an impact on the rear fender 132 in contact with the saddle assembly 15 during installation. If the impact is not handled properly, it is inevitable that the service life of the rear fender 132 will be reduced, and the loss of the saddle 151 will also be increased. At the same time, a buffer is mounted between the saddle 151 and the rear fender 132, which can give the saddle assembly 15 an upward force after the saddle locking hook 153 is unlocked, forming a gap between the rear of the saddle assembly 15 and the rear fender 132 that can be reached by hand, and creating a space for lifting the saddle assembly 15 by hand after the saddle assembly 15 is unlocked. At the same time, the buffer is consumable and the saddle assembly 15 is detachable. The saddle buffers 154 are arranged on the saddle 151 and can be disassembled together with the saddle assembly 15, facilitating timely replacement of the saddle buffers 154.

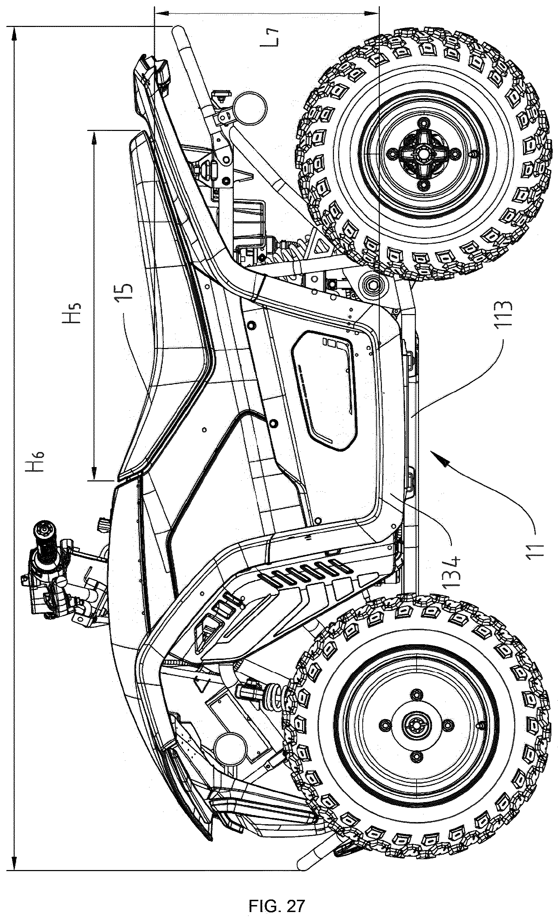

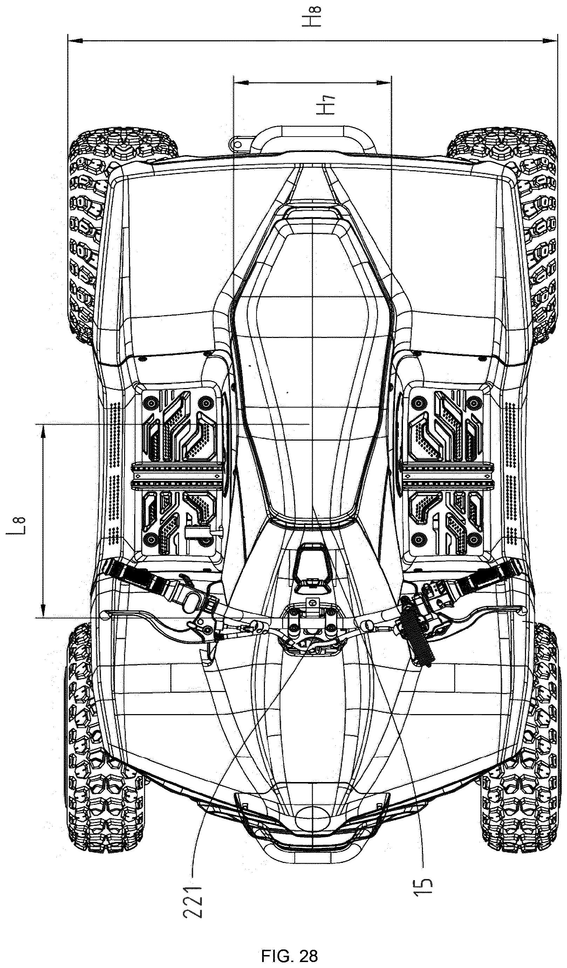

In some embodiments, as shown in FIG. 27, the frame 11 includes two foot pedal brackets 113 for mounting the foot pedals 134 parallel to the ground reference plane 107. A riding reference point is defined on the surface of the saddle assembly 15. The vertical distance from the riding reference point to the foot pedal 134 is defined as L7, and the L7 is in the range from 300 mm to 500 mm. The length of the saddle assembly 15 is defined as H5, and the H5 is in the range from 480 mm to 720 mm. The total length of the all-terrain vehicle is defined as H6, and the ratio of the H5 to H6 is in the range from 0.30 to 0.48. As shown in FIG. 28, the width of the saddle assembly 15 is defined as H7, and the H7 is in the range from 150 mm to 350 mm. The total width of the all-terrain vehicle is defined as H8, and the ratio of the H7 to H8 is in the range from 0.16 to 0.38. The minimum horizontal distance from the riding reference point to the handlebar assembly 221 along the first direction 101 is defined as L8, and the L8 is in the range from 370 mm to 550 mm. In the all-terrain vehicle 100, the relative position relationship between the seat cushion, the foot pedal and handlebar in the all-terrain vehicle 100, directly affects the driver's riding posture and has a significant impact on riding comfort. The body of the driver may need to lean forward when the distance from the riding reference point to the handlebar assembly 221 is too long. Sports cars or racing cars often adopt this riding posture to reduce wind resistance and achieve higher speed and acceleration ability. The body of the driver may need to be in a curled up state and not stretched enough when the distance from the riding reference point to the handlebar assembly 221 is too short, which increases riding fatigue. Sitting on the saddle assembly 15 with both feet suspended if the distance from the riding reference point to the foot pedal 221 is too long, which is difficult to operate the foot pedal, causing safety issues. The riding fatigue is increased if the distance from the riding reference point to the foot pedal 221 is too short. When the width of the saddle assembly 15 is too narrow, the contact area between the saddle and the driver's buttocks is smaller, causing greater pressure on the body, causing discomfort during cycling, exacerbating cycling fatigue, and even causing damage to the driver's body. The distance between driver's feet is too far if the saddle assembly 15 is too wide, which exacerbates the discomfort and causes safety issues. In conclusion, the vertical distance between the riding reference point and the foot pedal 134, the width of the saddle assembly 15, and the minimum horizontal distance between the riding reference point and the handlebar assembly 221 along the first direction 101 are limited in the above ranges, the driver can adopt comfortable riding posture, which can improve riding comfort and riding safety. In some preferred embodiments, the vertical distance from the riding reference point to the foot pedal 134 is defined as L7, and the L7 is in the range from 350 mm to 450 mm. The length of the saddle assembly 15 is defined as H5, and the H5 is in the range from 540 mm to 660 mm. The total length of the all-terrain vehicle is defined as H6, and the ratio of the H5 to H6 is in the range from 0.35 to 0.44. The width of the saddle assembly 15 is defined as H7, and the H7 is in the range from 200 mm to 300 mm. The total width of the all-terrain vehicle is defined as H8, and the ratio of the H7 to H8 is in the range from 0.21 to 0.32. The minimum horizontal distance from the riding reference point to the handlebar assembly 221 along the first direction 101 is defined as L8, and the L8 is in the range from 400 mm to 520 mm. In order to better ensure that the driver is in a comfortable position during riding, the relative positional relationship between the saddle assembly 15, the foot pedal 134, and the handle assembly 221 is further limited. In some preferred embodiments, the vertical distance from the riding reference point to the foot pedal 134 is defined as L7, and the L7 is in the range from 380 mm to 420 mm. The length of the saddle assembly 15 is defined as H5, and the H5 is in the range from 570 mm to 630 mm. The total length of the all-terrain vehicle is defined as H6, and the ratio of the H5 to H6 is in the range from 0.37 to 0.42. The width of the saddle assembly 15 is defined as H7, and the H7 is in the range from 220 mm to 280 mm. The total width of the all-terrain vehicle is defined as H8, and the ratio of the H7 to H8 is in the range from 0.23 to 0.30. The minimum horizontal distance from the riding reference point to the handlebar assembly 221 along the first direction 101 is defined as L8, and the L8 is in the range from 435 mm to 485 mm. In order to best ensure that the driver is in a comfortable position during riding, the relative positional relationship between the saddle assembly 15, the foot pedal 134, and the handle assembly 221 is further limited.

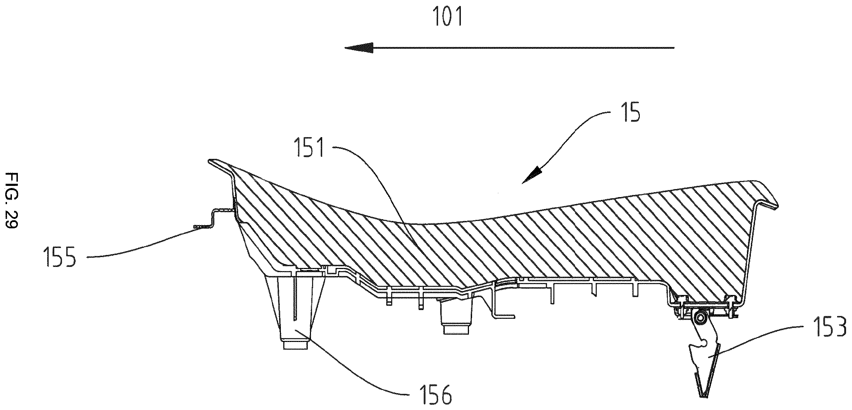

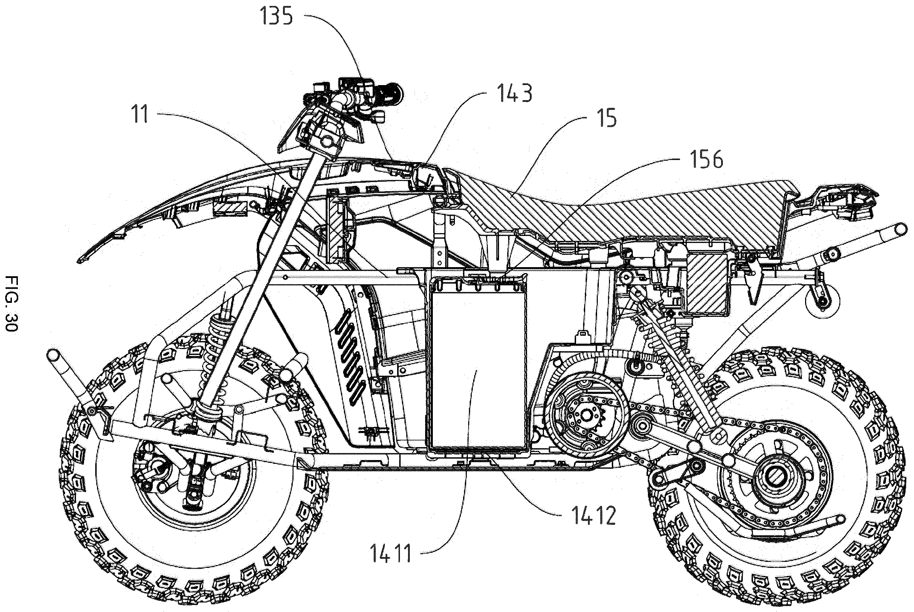

In some embodiments, as shown in FIG. 29, the saddle assembly 15 includes a saddle 151, a saddle fixing buckle 155 located at the bottom of the saddle 151, a power supply stopper 156 and a saddle locking hook 153. The saddle locking hook 153, the power supply stopper 156, and the saddle fixing buckle 155 are sequentially arranged at the bottom of saddle 151 along the first direction 101. The saddle fixing buckle 155 and the saddle locking hook 153 are respectively arranged at the front end and the rear end of the bottom of the saddle 151. The saddle fixing buckle 155 and the saddle locking hook 153 cooperate with each other to secure the saddle assembly 15 to the frame 11. When the saddle assembly 15 is in the first saddle state, as shown in FIG. 30, the saddle assembly 15 is locked to the frame 11, and the power supply stopper 156 limits the first power supply 1411 within the power supply compartment 1412. When the saddle assembly 15 is in the second saddle state, the saddle assembly 15 separates from the frame 11, and the interaction force between the power supply stopper 156 and the first power supply 1411 disappears. The first power supply 1411 is placed in the power supply compartment 14 12 by its own weight. The first power supply 1411 is mounted within the power supply compartment 1412 in the frame 11 space below the saddle assembly 15. The saddle assembly 15 has a stable structure, and fixing the first power supply 1411 by the saddle assembly 15 can reduce the use of additional structure for fixing the first power supply 1411. The power supply stopper 156 is arranged at the bottom of the saddle assembly 15, which can effectively utilize the structure and weight of the saddle assembly 15 to realize the limit of the first power supply 1411, reduce the development of the special first power supply 1411 fixed structure, and reduce the cost of the all-terrain vehicle 100. The first power supply 1411 is fixed by using the saddle assembly 15. When replacing the first power supply 1411, simply remove the saddle assembly 15 without unlocking a fixing structure of the first power supply 1411, which can increase the convenience of replacing the first power supply 1411.

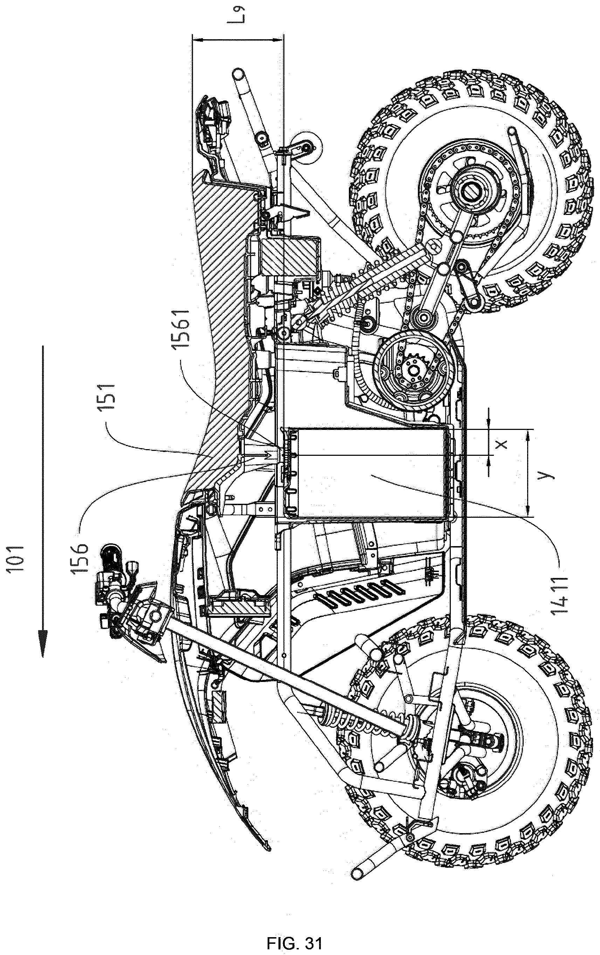

In some embodiments, as shown in FIG. 31, a plurality of power supply stoppers (such as 1, 2, 3 or 4 power supply stoppers) are arranged at the bottom of the saddle 151. The point where the power supply stopper 156 contacts the surface of the first power supply 1411 is defined as a point M. The point M is located at the rear of the surface of the first power supply 1411 along the first direction 101. The distance from the point M to the rear edge of the first power supply 1411 along the first direction 101 is defined as x. The length of the first power supply 1411 is defined as y. x is in the range from 0 to 1/2y. The vertical distance from the point M to a top of the saddle assembly 15 is defined as L9, and the L9 is greater than or equal to 30 mm. In some preferred embodiments, x is in the range from 1/4y to 1/2y. The L9 is greater than or equal to 50 mm. The saddle assembly 15 plays the role of fixing the first power supply 1411. However, the force between the power supply stoppers 156 and the first power supply 1411 is not only from the weight of the saddle assembly 15 itself, but also from the weight of the driver and his belongings during the running of the all-terrain vehicle 100. Therefore, the number of the power supply stoppers 156 and the contact area between power supply stoppers 156 and first power supply 1411 may depend on the weight of the saddle assembly 155 and the weight of the driver. The pressure on the surface of the first power supply 1411 should be controlled within a safe range, which can fix the first power supply 1411 without causing damage to the surface of the first power supply 1411, thereby preventing the occurrence of safety hazards. At most four power supply stoppers 156 can ensure the safety of the first power supply 1411 for cost reasons.

In some embodiments, a power supply 1561 is arranged between the first power supply 1411 and the power supply stopper 156. The power buffer 1561 may be located at the bottom of the power supply stopper 156 (as shown in FIG. 31) or on the upper surface of the first power supply 1411. The force between the power supply stoppers 156 and the first power supply 1411 is not only from the weight of the saddle assembly 15 itself, but also from the weight of the driver (and his belongings) during the running of the all-terrain vehicle 100. The power supply buffer 1561 arranged between the first power supply 1411 and the power limit 156 can reduce the impact of additional pressure generated during the installation of the saddle assembly 15 or when the driver sits on the saddle assembly 15 on the first power supply 1411. The power supply buffer 1561 can also buffer the pressure generated by the weight of the saddle assembly 15 and the driver and acting on the first power supply 1411, reducing the pressure directly acting on the first power supply 1411 and the pressure on the surface of the first power supply 1411. In addition, the power supply buffer 1561 between the first power supply 1411 and the power limit 156 can also play a role in helping unlocking the saddle assembly 15. When the saddle assembly 15 is unlocked, the power supply buffer 1561 can also provide an upward force to the saddle, just like the saddle buffer 154. The power supply buffer 1561 and the saddle buffer 154 cooperatively form a gap between the rear of saddle assembly 15 and the rear fender 132 that can be reached by hand, creating a space that can be lifted by hand after the saddle assembly 15 is unlocked.

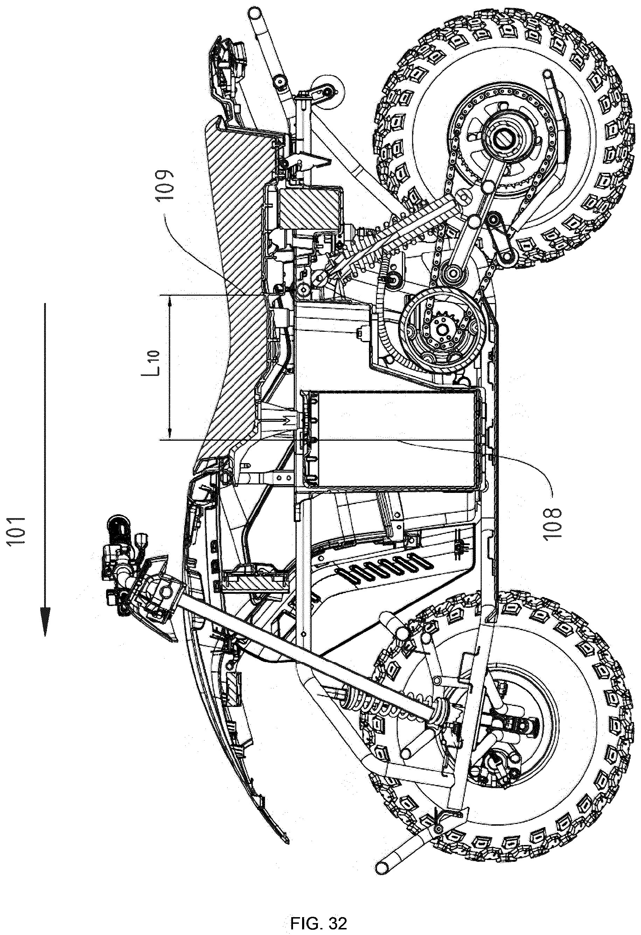

In some embodiments, as shown in FIG. 32, a projection of the first power supply 1411 projected on the ground reference plane 107 along the upper-lower direction is defined as a first projection. A projection of the saddle assembly 15 projected on the horizontal projection plane 107 along the upper-lower direction is defined as a third projection. The median line of the first projection along the first direction 101 is the first median line, and the median line of the third projection along the first direction 101 is the second median line. The first median line is in forward than the second median line along the first direction 101. The center of gravity of the first power supply 1411 is located forward than the center of gravity of the saddle, and the first power supply 1411 is integrally located at the front below the saddle assembly 15. Due to the presence of a drive motor 191 below the saddle assembly 15, the drive motor 191 also accounts for a relatively large weight proportion in electrically driven vehicles. In order to facilitate the drive motor 191 in driving the first wheels 121, the drive motor 191 needs to be located at the rear of frame 11. In order to balance the front and rear weight distribution of the all-terrain vehicle 100, the first power supply 1411 is arranged in front of the center of gravity of the frame 11, so the first power supply 1411 is arranged in front of the space below the saddle assembly 15 to balance the center of gravity of the all-terrain vehicle 100. The distance from the first median line to the second median line is defined as L10, and the L10 is in the range from 200 mm to 300 mm. In some more preferred embodiments, the L10 is in the range from 225 mm to 275 mm. In some more preferred embodiments, the L10 is in the range from 235 mm to 265 mm.

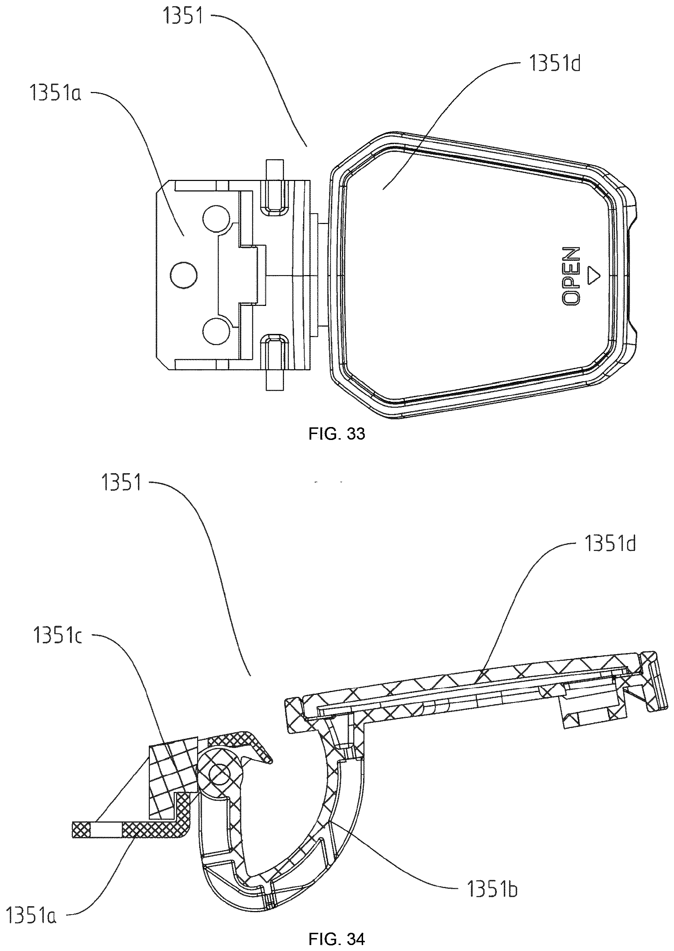

In some embodiments, a charging port 143 for on-board charging the first power supply 1411 is defined on the power supply guard 135 (as shown in FIG. 30). A charging cover component 1351 for covering the charging port 143 is arranged adjacent to the charging port 143 (as shown in FIG. 26). As shown in FIGS. 33 and 34, the charging cover component 1351 includes a cover mounting base 1351a, a hinge 1351b, a damping block 1351c, and a cover plate 1351d. The cover mounting base 1351a is fixed at the bottom of the power supply guard 135 at the front end of the charging port 143 along the first direction 101 or on the frame 11 at the front end of the charging port 143 along the first direction 101. The fixed end of the hinge 1351b is fixed on the cover mounting base 1351a by a fixing pin 1351e. The damping block 1351c is mounted on the cover mounting base 1351a and is attached to the fixed end of the hinge 1351b. The cover plate 1351d is fixedly connected to the other end of the hinge 1351b and covers the charging port 143. A limiting structure 1351f is arranged at the side of the cover mounting base 1351a adjacent to the cover plate 1351d. which is used to limit the opening angle of the hinge 1351b, thereby limiting the opening angle of the cover plate 1351d. The opening angle of the cover plate 1351d is less than or equal to 90°. The fixed end of the hinge 1351b is an eccentric structure, and as the hinge 1351b rotates, the deformation of the damping block 1351c that fits with the hinge 1351b increases.

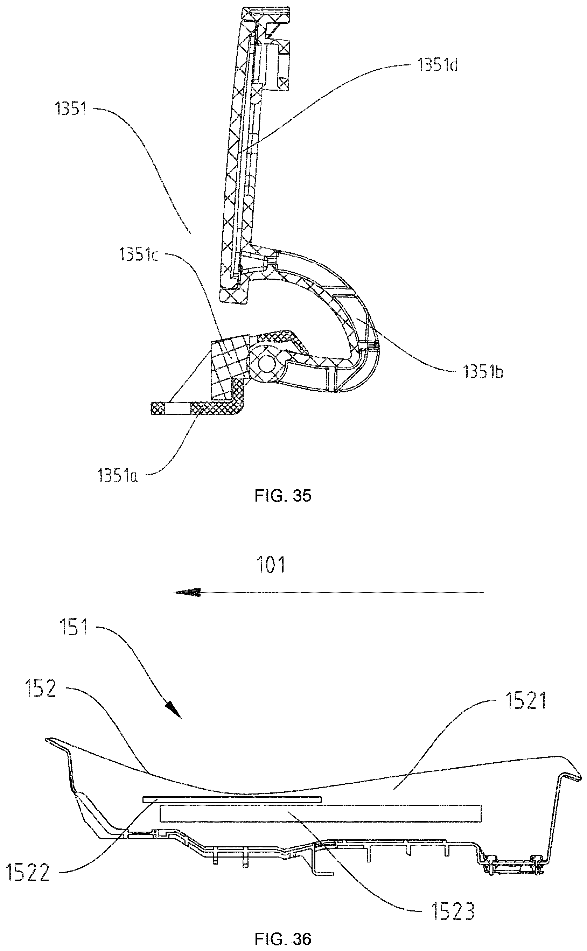

In some embodiments, the charging cover component 1351 has a first state and a second state. When the charging cover component 1351 is in the first state (as shown in FIG. 34), the cover plate 1351d covers the charging port 143. The charging port 143 is located in the space below the cover plate 1351d, and the hinge 1351b does not compress the damping block 1351c. When the charging cover component 1351 is in the second state (as shown in FIG. 35), the cover plate 1351d flipped up and the charging port 143 exposed. The charging device 1413 in the charging port 143 can be used to charge the first power supply 1411, and the hinge 1351b compresses the damping block 1351c. During the transition of charging cover assembly 1351 from the first state to the second state, the hinge 1351b rotates, and the rotating hinge 1351b continuously compresses the damping block 1351c, resulting in a corresponding squeezing force. The damping block 1351c undergoes deformation under the squeezing force generated by the rotation of hinge 1351b. After deformation, the damping block 1351c tends to restore its original state, generating a reverse force on the hinge 1351b. Due to the reverse force of damping block 1351c and the fixing effect of fixing pin 1351e, a friction force is generated on the surface where the hinge 1351b contacts the damping block 1351c. Under the action of this frictional force, if the position of hinge 1351b is fixed without external force, the hinge 1351b can achieve hovering at any position. During the transition from the first state to the second state of the charging cover component 1351, the maximum deformation size of the damping block 1351c along the first direction 101 is in the range from 0.3 mm to 0.5 mm. In some preferred embodiments, during the transition from the first state to the second state of the charging cover component 1351, the maximum deformation size of the damping block 1351c along the first direction 101 is in the range from 0.35 mm to 0.45 mm. During the rotation of the hinge 1351b, the hinge 1351b compresses the damping block 1351c and generates corresponding friction force due to the mutual pressure between the hinge 1351b and the damping block 1351c, thereby enabling the hinge 1351b to hover at any position. When the degree of compression between the hinge 1351b and the damping block 1351c is too small, the frictional force between the hinge 1351b and the damping block 1351c is too small to overcome its own gravity and make the hinge 1351b hover at any position. When the degree of compression between the hinge 1351b and the damping block 1351c is too large, the pressure between the hinge 1351b and the damping block 1351c is too high, which will cause difficulty in rotating hinge 1351b, thereby making it difficult to open the cover plate 1351d. Therefore, the degree of compression between the hinge 1351b and the damping block 1351c should be selected in an appropriate range, which not only ensures that hinge 1351b can hover at any position, but also ensures that it does not increase the difficulty of hinge 1351b rotation. When the charging cover component 1351 transitions from the first state to the second state, the angle between the cover plate 1351d in the charging cover component 1351 and the ground reference plane 107 is always less than or equal to 90°.

In some embodiments, the damping block 1351c is made of rubber materials. Rubber materials have good elasticity and high friction coefficients with various material surfaces. After the damping block 1351c is compressed by the hinge 1351b after rotation, the damping block 1351c tends to return to its original state, which generates pressure on the hinge 1351b. Meanwhile, due to the high friction coefficient between the surface of damping block 1351c and the surface of hinge 1351b, the frictional force generated by pressure locks the position of hinge 1351b, enabling the charging cover component 1351 to hover at any position. By using rubber materials as the damping block 1351c, sufficient friction can be obtained between the hinge 1351b and the damping block 1351c, allowing the hinge 1351b to hover in any position while reducing the difficulty of opening the hinge 1351b and increasing its usability.

In some embodiments, as shown in FIG. 36, a saddle cover 152 covers the saddle 151. The saddle cover 152 includes a contact portion 1521 and a pressure sensor 1522 located in the contact portion 1521. A heating component 1523 electrically connected to the control unit 24 is arranged in the contact portion 1521 of the saddle cover 152. The pressure sensor 1522 is capable of monitoring the first state and the second state of the saddle cover 152. When the pressure sensor 1522 detects the first state, that is, the pressure sensor 1522 does not detect pressure, the pressure sensor 1522 does not output a pressure signal to control unit 24, and the heating component 1523 does not work. When the pressure sensor 1522 detects the second state, that is, when the pressure sensor 1522 senses a pressure, the pressure sensor 1522 outputs a pressure signal to the control unit 24, which controls the heating component 1523 to heat the saddle cover 152. The pressure sensor 1522 and the heating component 1523 are integrated on the saddle assembly 15, and the pressure sensor 1522 and heating component 1523 are located in the saddle cover 152. When the driver sits on the saddle assembly 15, the pressure sensor 1522 detects the second pressure state and outputs a pressure signal to control unit 24. The control unit 24 controls heating component 1523 to start working and to heat the saddle cover 152. When the driver leaves the saddle assembly 15, the pressure sensor 1522 detects the first pressure state and stops outputting pressure signals to control unit 24. The control unit 24 controls heating component 1523 to automatically stop working and stop heating the saddle cover 152. When the pressure sensor 1522 detects the first state, if the control unit 24 receives that the all-terrain vehicle 100 is in an unlocked state or non-parking state, then the control unit 24 controls the lamps 21 of the all-terrain vehicle 100 to emit light prompts or controls the horn of the all-terrain vehicle 100 to emit sound prompts. In some embodiments, for the all-terrain vehicle 100 that can be remotely controlled, a remote interaction unit of the all-terrain vehicle 100 can also be controlled to send prompts to a remote device that has been paired with/connected to the all-terrain vehicle 100. In addition, the remote interaction unit of the all-terrain vehicle 100 can also be controlled to enable the control unit 24 to control the heating component 1523 to be turned on in advance and to preheat the saddle cover 152 to ensure the use experience in the low temperature environment.

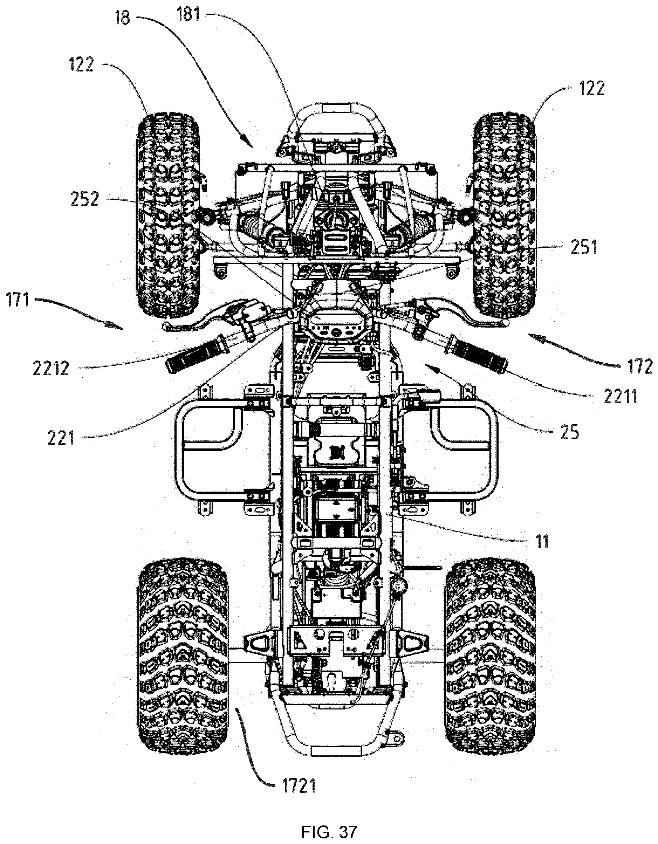

In some embodiments, as shown in FIG. 37, a steering assembly 18 is pivoted in front of the frame 11, and the second wheels 122 are located below the steering assembly 18. The second wheels 122 includes two traveling shafts 1221, each equipped with a driven wheel, which can be driven to rotate by the steering assembly 18. The steering assembly 18 includes a steering shaft 181 and a handlebar assembly 221 including a first grip 2211 and a second grip 2212. In some embodiments, the instrument assembly 25 is arranged on handlebar assembly 221. The instrument assembly 25 can rotate about the handlebar assembly 221 by a certain angle range. The instrument assembly 25 is mainly used to display information related to the all-terrain vehicle 100. The display angle of an information display device 252 on instrument assembly 25 should be within the driver's visual range (especially the driver's optimal visual range), so that the driver can more easily and clearly obtain the information displayed on the instrument assembly 25. However, the visual range varies for drivers of different body shapes. The instrument assembly 25 can be rotated about the handlebar by a certain angle range and the display angle of the information display device 252 in the instrument assembly 25 can be adjusted, which can better meet the driver's demand for information display and improve the safety of the all-terrain vehicle 100.

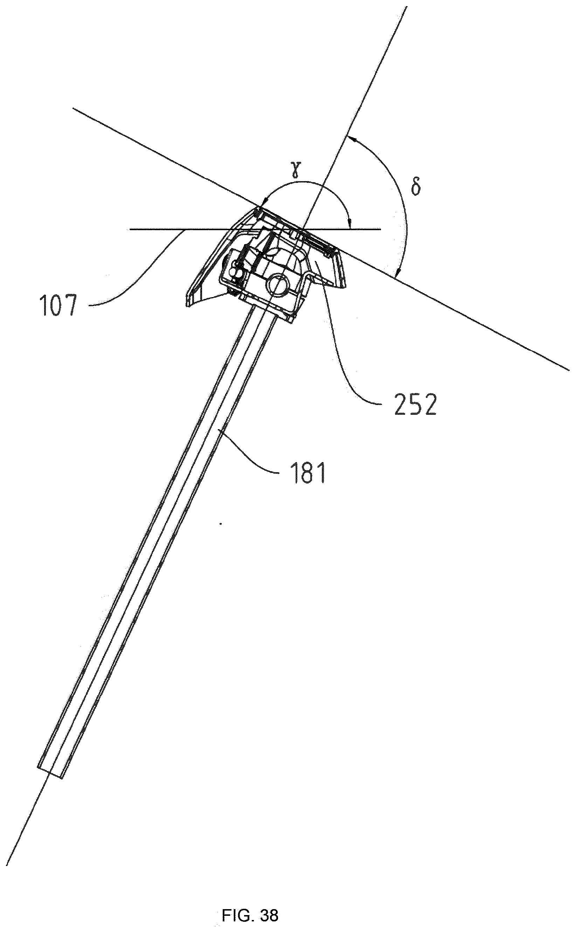

In some embodiments, as shown in FIG. 37, the instrument assembly 25 includes an instrument body 251 and an information display device 252 located on the surface of the instrument body 251. The information display device 252 is a display screen that can display running information and status information of the all-terrain vehicle 100. The instrument assembly 25 is arranged on the handlebar assembly 221 of the manipulation assembly 22. In some embodiments, the instrument assembly 25 is arranged in the middle of the handlebar assembly 221. The information display device 252 is arranged on the handlebar to avoid possible obstruction of the handlebar to the instrument assembly 25, and can facilitate the driver to read the information on the information display device 252 in the instrument assembly 25. At the same time, the information display device 252 in the instrument assembly 25 can also rotate with the handlebar when the driver rotates the handlebar, which solves the problem of difficulty in reading information from the information display device 252 during steering and improves the visual effect of the instrument assembly 25. The instrument assembly 25 being arranged on the handlebar assembly 221 can shorten the distance between the driver and instrument assembly 25, making it easier for the driver to operate the information input device 253 on the instrument assembly 25. In addition, the combination of the instrument assembly 25 and the handlebar assembly 221 can simplify the vehicle body structure, realize the lightweight of the all-terrain vehicle 100, and save space on the all-terrain vehicle 100, especially for the small-size all-terrain vehicle, and save more space for the setting of other components and devices. As shown in FIG. 38, the angle between the display interface of the information display device 252 and the ground reference plane 107 is defined as an angle γ, and the angle γ is in the range from 90° to 180°. The angle between the display interface of the information display device 252 and an axis of the steering shaft 181 of the steering assembly 18 is defined as an angle δ, and the angle δ is in the range from 25° to 115°. The orientation of the display interface of the information display device 252 affects whether the driver can effectively obtain the information displayed on the information display device 252. The angle between the display interface of the information display device 252 and the ground reference plane 107, and the angle between the display interface of the information display device 252 and the steering shaft 181 are limited within an suitable range, so that the display interface of the information display device 252 is within the driver's visual range, facilitating the driver to easily and clearly obtain information from the information display device 252 during the running of the all-terrain vehicle 100. In some preferred embodiments, the angle between the display interface of the information display device 252 and the ground reference plane 107 is defined as an angle γ, and the angle γ is in the range from 130° to 170°. The angle between the display interface of the information display device 252 and an axis of the steering shaft 181 of the steering assembly 18 is defined as an angle δ, and the angle δ is in the range from 60° to 100°. In order to better obtain information from the information display device 252 during the running of the all-terrain vehicle, the display interface of the information display device 252 is further limited. In order to best obtain information from the information display device 252 during the running of the all-terrain vehicle, the angle between the display interface of the information display device 252 and the ground reference plane 107 is defined as an angle γ, and the angle γ is in the range from 145° to 155°. The angle between the display interface of the information display device 252 and an axis of the steering shaft 181 of the steering assembly 18 is defined as an angle δ, and the angle δ is in the range from 80° to 90°.

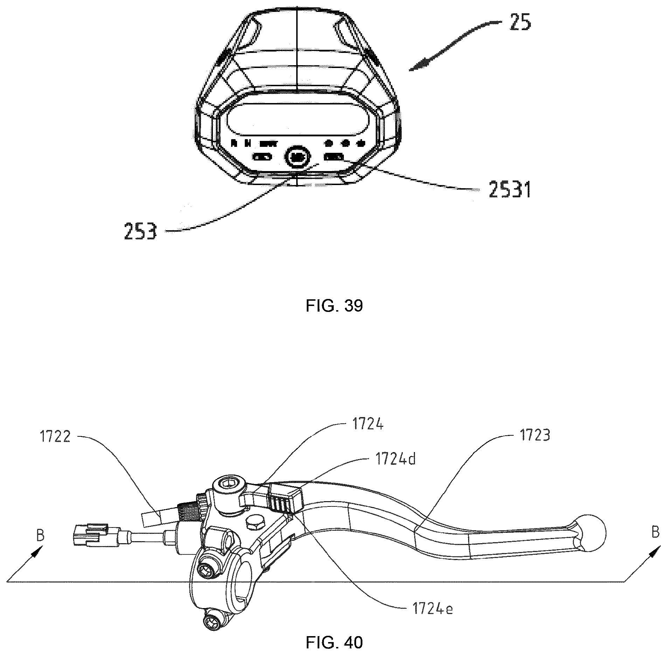

In some embodiments, as shown in FIG. 39, the instrument assembly 25 further includes an information input device 253, which includes an emergency call button 2531 electrically connected to the control unit 24. The emergency call button 2531 has a first state. The control unit 24 receives emergency information and then controls the all-terrain vehicle 100 to send warning information and/or send emergency call information to a remote device when the emergency call button 2531 is in the first state. The emergency call button 2531 is used for the driver to input emergency information. After the emergency information is input, the emergency information is sent to the control unit 24 for the emergency call button 2531, which controls the all-terrain vehicle 100 to send warning information and/or send emergency information to the remote device. In an emergency situation, the driver inputs emergency information by pressing the emergency call button 2531. The emergency information is sent to the control unit 24 for controlling the emergency call button 2531. The control unit 24 controls the lamps 21 and/or horn and other audible components of the all-terrain vehicle 100 to send an emergency call message, so as to inform the surrounding personals of the emergency encountered by the all-terrain vehicle 100 and the driver, so that the surrounding personals can detect the emergency situation of the driver. At the same time, after receiving the emergency information, the control system further controls the remote interaction unit of the all-terrain vehicle 100 to send emergency call information to the remote device that has been paired with/connected to the all-terrain vehicle 100 to inform the designated personnel outside the emergency scene of the emergency situation where the all-terrain vehicle 100 and the driver are, so that the designated personnel can detect the emergency situation of the driver and handle the emergency situation appropriately.

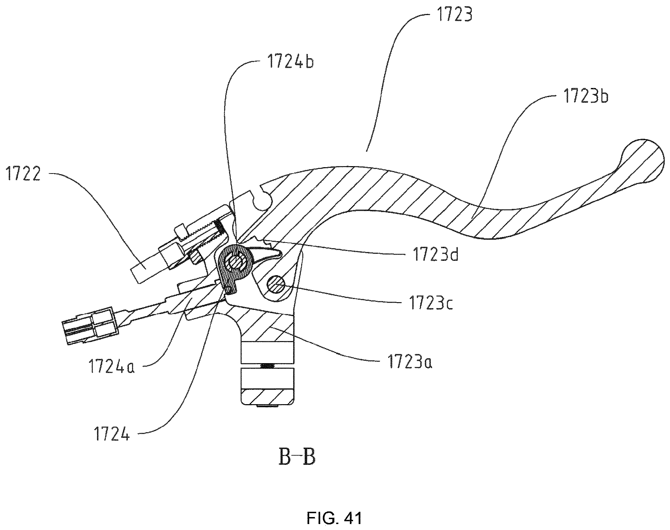

In some embodiments, the brake system 17 includes a brake assembly 171 and a parking assembly 172. The parking assembly 172 is used to park the all-terrain vehicle 100 to prevent the all-terrain vehicle 100 from sliding after the all-terrain vehicle 100 stops stably. As shown in FIG. 40 and 41, the parking assembly 172 includes a parking mechanism 1721 (as shown in FIG. 37), a hand brake cable 1722, a hand brake lever 1723, and a limiting buckle 1724. One end of the hand brake cable 1722 is connected to the parking mechanism 1721, and the other end of the hand brake cable 1722 is connected to the hand brake lever 1723. By pressing the hand brake lever 1723, the force on the hand brake lever 1723 is transferred to the parking mechanism 1721 by the hand brake cable 1722, so as to park the all-terrain vehicle 100. The limiting buckle 1724 is used to lock the parking mechanism 1721, so that the all-terrain vehicle 100 is always in the parking state.

In some embodiments, as shown in FIG. 41, a circuit breaker 1724a is arranged within the limiting buckle 1724, and the circuit breaker 1724a has a first state and a second state. The circuit breaker 1724a does not send any current cut-off signal to the control unit 24 in the first state. The circuit breaker 1724a sends a current cut-off signal to the control unit 24 in the second state. The limiting buckle 1724 includes a first position and a second position. The first position is in a non-parking state, and when the limit buckle 1724 is in the first position, the circuit breaker 1724a is in the first state. The second position is in the parking state, and when the limit buckle 1724 is in the second position, the circuit breaker 1724a is in the second state. The first power supply 1411 receives the current cut-off from the control unit 24 only when the limiting buckle 1724 is in the second position during parking the all-terrain vehicle 100. Only when the driver really wants to park, they will pull the limit buckle 1724 to the second position to park the all-terrain vehicle 100, which avoids the event caused by accidentally touching the hand brake lever 1723 during driving and immediately stopping the power supply of the first power supply 1411, effectively prevents the occurrence of danger, and at the same time avoids repeated ignitions.

In some embodiments, as shown in FIG. 41, the parking assembly 172 includes a parking mechanism 1721 (as shown in FIG. 37), a hand brake cable 1722, a hand brake lever 1723, a limiting buckle 1724 and a circuit breaker 1724a. The hand brake lever 1723 includes a fixing portion 1723a arranged on the handlebar assembly 221 and an operating portion 1723b pivoted to the fixing portion 1723a by a first pivot 1723c. The operating portion 1723b can rotate in a direction towards the handlebar along the axis of the first pivot 1723c. The hand brake cable 1722 are pulled during the rotation of the operating portion 1723b to brake the parking mechanism 1721. A plurality of toothed limit grooves 1723d are defined in the operating portion 1723b. The limiting buckle 1724 is pivoted to the fixing portion 1723a by a second pivot 1724b. A limiting protrusion 1724c are arranged on the limiting buckle 1724. The limiting buckle 1724 is rotated, making the limit protrusion 1724c being clamped in different toothed grooves, to achieve varying degrees of pressure from the operating portion 1723b in the direction towards the handlebar assembly 221, so that the hand brake cable 1722 can brake the parking mechanism 1721 with different pulling forces. The limit buckle 1724 is connected to the circuit breaker 1724a. The circuit breaker 1724a has a first state and a second state. The circuit breaker 1724a does not send any current cut-off signal to the control unit 24 in the first state. The circuit breaker 1724a sends a current cut-off signal to the control unit 24 in a second state. The limiting buckle 1724 has a first position and a second position. The first position and second position are respectively the positions of the toothed grooves at the edge position of the toothed limit groove 1723d. When the limiting buckle 1724 drives the limiting protrusion 1724c to rotate to the first position, the circuit breaker 1724a is in the first state and does not send a current cut-off signal to the control unit 24. When the limiting buckle 1724 drives the limit protrusion 1724c to rotate to the second position, the circuit breaker 1724a sends a current cut-off signal to the control unit 24. The limiting buckle 1724 includes a push rod 1724d (as shown in FIG. 40) with a plurality of anti-slip protrusions 1724e (as shown in FIG. 40) located below the push rod 1724d to increase the friction force of the push rod 1724d and prevent slipping when pushing the push rod.

In some embodiments, the circuit breaker 1724a includes a contact switch, which includes a third state and a fourth state. When the contact switch is in the third state, the circuit breaker 1724a does not send a current cut-off signal to the control unit 24. When the contact switch is in the fourth state, the circuit breaker 1724a sends a current cut-off signal to the control unit 24. The limit buckle 1724 is arranged on one side of the hand brake lever 1723 and is pivoted to the fixing portion 1723a. When the limit buckle 1724 is in the first position, the contact switch is in a normally open state and does not send a current cut-off signal to the control unit 24. When the driver pushes the hand brake lever 1723 toward handle assembly 221, the hand brake lever 1723 pulls the hand brake cable 1722 to control the parking mechanism 1721 to brake all-terrain vehicle 100. The limit buckle 1724 is pushed to the second position, making the hand brake lever 1723 under pressure. The hand brake lever 1723 keep pulling the hand brake cable 1722 to control the parking mechanism 1721, so that enabling the all-terrain vehicle 100 is in the parking state. The circuit breaker 1724a is arranged in the limit buckle 1724, which on the one hand avoids the situation where the power supply system 14 stops supplying power to the drive motor 191 and the drive motor 191 stops working due to accidentally touching the hand brake lever 1723, and avoids the risk of sliding while the all-terrain vehicle 100 is climbing a slope or running on a relatively complicated road. On the other hand, only when the driver really wants to park the all-terrain vehicle 100, they pushes the hand brake lever 1723 in the direction towards the hand brake lever and pull the limit buckle 1724, making the limit buckle 1724 being in the second state, then the circuit breaker 1724a sends a current cut-off signal to the motor control unit 241. The motor control unit 241 controls the first power supply 1411 to stop supplying power to the drive motor 191, avoiding the event where other drivers may not know that the all-terrain vehicle 100 is in a parking state and drives the vehicle under brake, which may affect the performance of the all-terrain vehicle 100.

In some embodiments, except for the parking mechanism 1721, other components of the parking assembly 172 are located on the right side of the all-terrain vehicle to facilitate the user's right hand operation. The hand brake lever 1723 is the first grip 2211 located on the right side of the handlebar assembly 221. The parking assembly 172 in this embodiment requires the driver to squeeze the hand brake lever 1723 towards the first grip 2211 and then pull the limit buckle 1724 to make the limit buckle 174 in the second position, so that the all-terrain vehicle 100 is in the parking state. During this process, the driver needs to operate the hand brake lever 1723 with one hand and the limit buckle 1724 with the other hand, which reduces the possibility of accidental parking operation. The parking operation can only be completed when the driver really needs to park the all-terrain vehicle. The circuit breaker 1724a is located inside the limiting buckle 1724. Although the driver cannot control the all-terrain vehicle 100 to enter the parking state with one hand, there is still a possibility of individual mis-operation of the limit buckle 1724, which cannot completely avoid the danger caused by mis-operation. This embodiment further reduces the probability of mis-operation by arranging the components (except for parking mechanism 1721) of parking assembly 172 on the first grip 2211 on the right side of handle assembly 221. Generally, the vast majority of users are right-handed users. In order to facilitate the user's operation, the all-terrain vehicle 100 is designed with more operating devices on the right side of the all-terrain vehicle 100. This includes speed control devices and most braking devices. Compared to the left hand, the right hand has smaller degrees of freedom. For child users, the smaller degree of freedom of the right hand can ensure that there is less autonomous or involuntary excess movement in the right hand. Most of the components in parking assembly 172 are located on the first grip 2211 on the right side of handle assembly 221, which is controlled by the right hand and can reduce the possibility of accidental contact caused by unnecessary actions, reduce the probability of accidental contact, and improve safety.

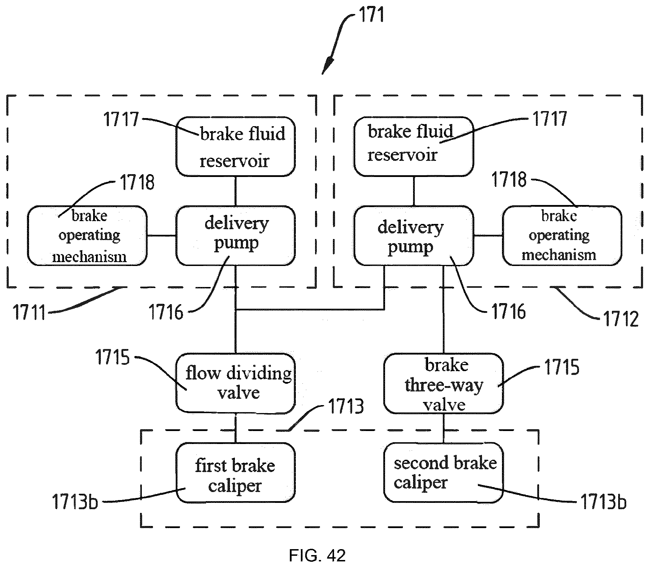

As shown in FIG. 42, the brake assembly 171 includes a first brake assembly 1711, a second brake assembly 1712, a brake caliper 1713, a flow dividing valve 1714, and three-way brake valve 1715. The brake caliper 1713 includes a first brake caliper 1713a and a second brake caliper 1713b. When operating the first brake assembly 1711, the brake fluid pumped out by the first brake assembly 1711 flows by the flow dividing valve 1714 to the first brake caliper 1713a, controlling the first brake caliper 1713a for braking. When operating the second brake assembly 1712, the brake fluid output end of the second brake assembly 1712 is divided into two channels, one channel is in fluid communication with the flow dividing valve 1714 to control the first brake caliper 1713a for braking, and the other channel is in fluid communication with the second brake caliper 1713b by the three-way brake valve 1715 to control the second brake caliper 1713b for braking. The first brake assembly 1711 and the second brake assembly 1712 output brake fluid to the brake caliper 1713 according to the driver's operation. The first brake assembly 1711 and the second brake assembly 1712 should include a delivery pump 1716, a brake fluid reservoir 1717, and a brake operating mechanism 1718 for driving the delivery pump 1716. The brake fluid reservoir 1717 is used to hold brake fluid, and the brake fluid reservoir 1717 may be integrated with the delivery pump 1716. In some embodiments, the brake fluid reservoir 1717 and the delivery pump 1716 may be two split structures. The delivery pump 1716 may be a structure similar to a plunger pump, utilizing the driver's operation of the brake operating mechanism 1718, such as the operation of the hand-operated brake device 1718a and the foot-operated brake device 1718b, to draw brake fluid from the brake fluid reservoir 1717 and output the brake fluid.

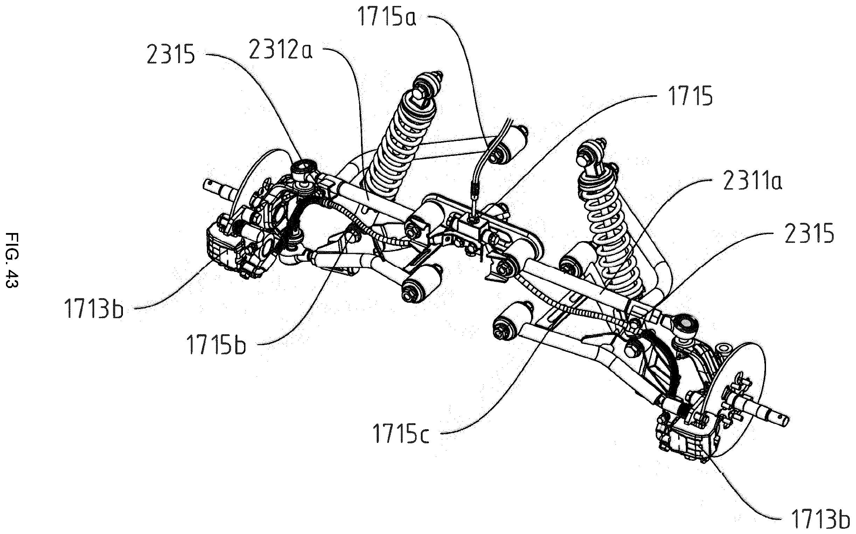

In some embodiments, the second brake assembly 1712 is a hand-operated brake device 1718a and mounted on the first grip 2211/the second hand handlebar 2212, and the first brake assembly 1711 is a foot-operated brake device 1718b. In some exemplary embodiments, the second brake assembly 1712 is mounted on the second grip 2212. The brake fluid in the brake fluid reservoir 1717 is input to the second brake caliper 1713b by a delivery pump by manipulating the second brake assembly 1712, thereby controlling the second brake caliper 1713b for braking. As shown in FIG. 43, the second brake assembly includes two second brake calipers 1713b mounted on the two different first wheels 121. The brake fluid in the brake fluid reservoir 1717 is sucked out by the delivery pump and enters the brake three-way valve 1715 by a first brake pipe 1715a. The brake fluid from the first brake pipe 1715a is divided into two channels by the brake three-way valve 1715, then the two channels of the brake fluid are respectively input into the two different rear wheels 121 by a second brake pipe 1715b and a third brake pipe 1715c for braking the wheels 12. In some embodiments, the brake three-way valve 1715 is arranged between the two pivot shafts of the first horizontal rocker arm 2311a and the second horizontal rocker arm 2312a. The plane where the straight line connecting the pivot center of the first horizontal rocker arm 2311a and the pivot center of the second horizontal rocker arm 2312a is located is defined as a preset plane, the preset plane being parallel to the ground reference plane 107. The preset plane is defined as a Zero-height reference plane. That is to say, if the brake three-way valve 1715 is above the preset plane, the distance from the brake three-way valve 1715 to the preset plane is a positive value (+), and if the brake three-way valve 1715 is below the preset plane, the distance from the brake three-way valve 1715 to the preset plane is a negative value (-). The distance from the brake three-way valve 1715 to the preset plane is in the range from -60 mm to 60 mm. The front end of the brake three-way valve 1715 in the first direction 101 shall not exceed the front end of the frame 11 in the first direction 101. The rear end of the brake three-way valve 1715 in the first direction 101 shall not exceed the rear end of the steering shaft 181 in the first direction 101. In some preferred embodiments, the distance from the brake three-way valve 1715 to the preset plane is in the range from -40 mm to 40 mm. The front end of the brake three-way valve 1715 in the first direction 101 shall not exceed the front end of the frame 11 in the first direction 101. The rear end of the brake three-way valve 1715 in the first direction 101 shall not exceed the rear end of the steering shaft 181 in the first direction 101. In some more preferred embodiments, the distance from the brake three-way valve 1715 to the preset plane is in the range from -20 mm to 20 mm. The front end of the brake three-way valve 1715 in the first direction 101 shall not exceed the front end of the frame 11 in the first direction 101. The rear end of the brake three-way valve 1715 in the first direction 101 shall not exceed the rear end of the steering shaft 181 in the first direction 101.

In some embodiments, as shown in FIG. 43, the second brake pipe 1715b/the third brake pipe 1715c is respectively mounted on the first horizontal rocker arm 2311a/the second horizontal rocker arm 2312a by a brake pipe mounting seat 2315 located adjacent to the position where the first horizontal rocker arm 2311a/the second horizontal rocker arm 2312a is pivoted to the wheels 12. The second brake pipe 1715b/the third brake pipe 1715c is secured to the position adjacent to the wheels 12, which reduces the expansion and contraction of the second brake pipe 1715b and the third brake pipe 1715c during wheel hop, improves the braking effect of brake system 17, and achieves symmetrical arrangement of the brake pipe, simplifies the brake pipe layout structure, making the brake pipe structure more streamlined and reasonable.

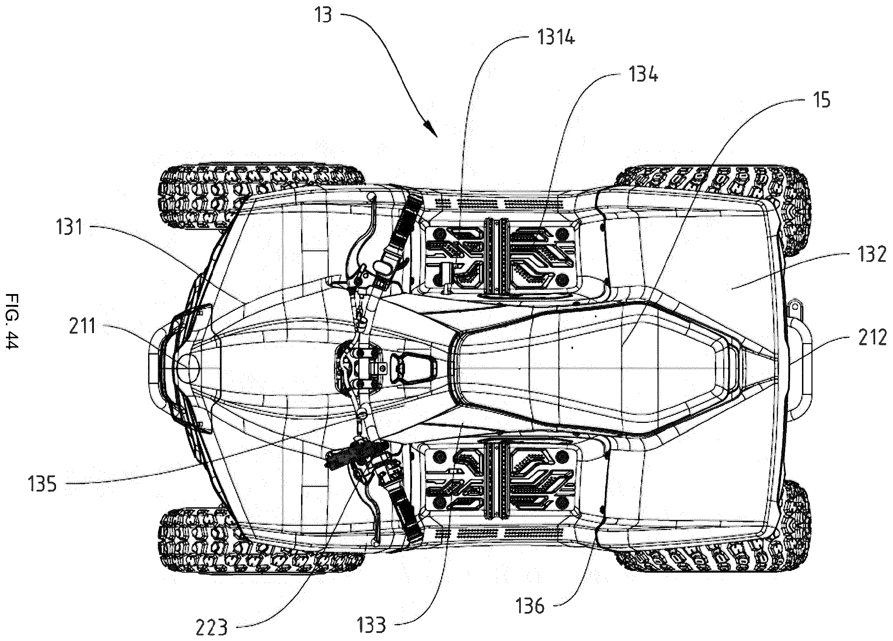

As shown in FIG. 44, the vehicle cover 13 includes a front fender 131, a rear fender 132, a power supply guard 135, two side guards 133, and two foot pedals 134. The front fender 131 is mounted at the front end of frame 11, the rear fender 132 is mounted at the rear end of frame 11, and the power supply guard 135 is mounted between the front fender 131 and the saddle assembly 15. The foot pedals 134 are mounted in the middle position of the frame 11 and includes a left foot pedal and a right foot pedal. The side guards 133 includes a left guard located between the left foot pedal and the power supply guard 135 and a right guard located between the right foot pedal and the power supply guard 135. The size of the small all-terrain vehicle 100 is relatively small. In order to save injection costs, the power supply guard 135 and the front fender 131 are injected into an integrated structure to enhance the structural rigidity, simplify the assembly process, improve the assembly efficiency, and reduce the production cost of the all-terrain vehicle 100.

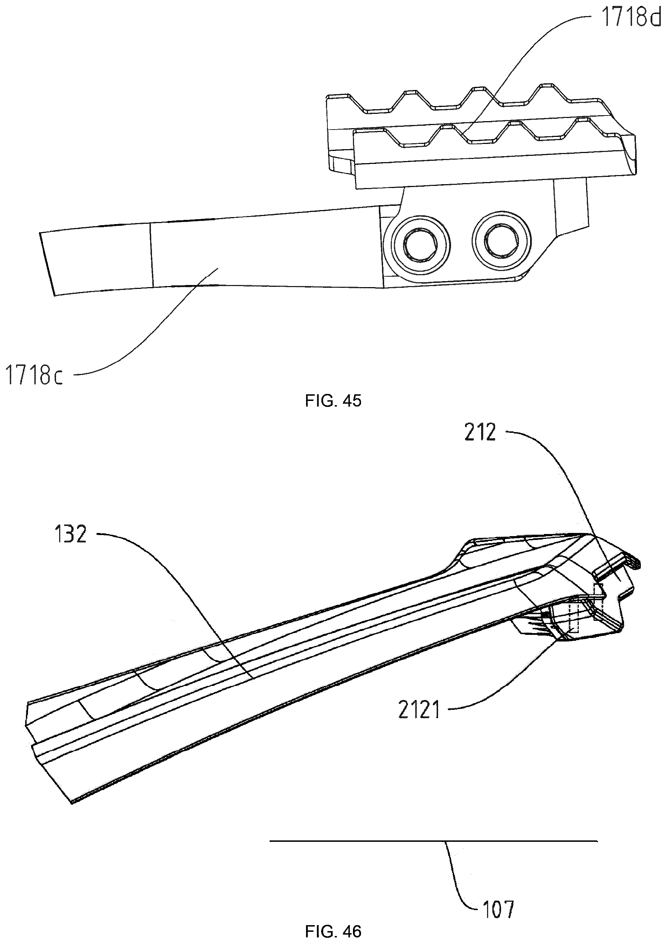

All of the front fender 131, the rear fender 132, the side guards 133, and the foot pedals 134 are made of plastics. In some embodiments, as shown in FIG. 45, the foot-operated brake device 1718b is designed as a split structure. The foot-operated brake device 1718b includes a foot brake pedal arm 1718c and a foot brake pedal 1718d connected to each other by bolts. During assembly, the foot pedal 134 can be assembled with other plastic parts of the body cover 13 in advance, and then the foot brake foot pedal 1718d can be mounted on the foot brake foot pedal arm 1718c. The mounting hole 1341 (as shown in FIG. 44) for the split-type foot brake foot pedal 1718d is smaller than the mounting hole for the integrated foot brake foot pedal, which improves the strength of the plastic parts of the foot brake foot pedal 134.

The lamps 21 includes a head lamp 211 and a tail lamp 212 (as shown in FIG. 44). As shown in FIG. 46, a plurality of tail lamp mount holes 2121 are located at the rear end of the rear fender 132. The centerline of the plurality of tail lamp mount holes 2121 is perpendicular to the ground reference plane 107. The tail lamp 212 cover is fixed and mounted at the end of the rear fender 132 by the plurality of tail lamp mount holes 2121. The centerline of tail lamp mounting hole 2121 is perpendicular to the ground reference plane 107. For the small all-terrain vehicle 100, assembly and maintenance personals can assemble and repair the tail lamp 212 cover without squatting deeply, which is more convenient for maintenance. In addition, the weight of the vehicle body was reduced and the production costs were saved without using the tail lamp 212 panel.

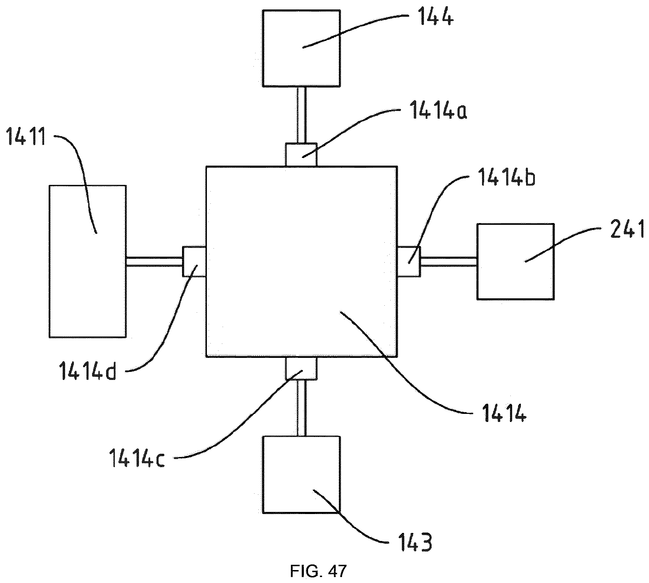

In some embodiments, a high-voltage junction unit 1414 is arranged at the output end of the first power supply 1411. As shown in FIG. 47, the high-voltage distribution unit 1414 includes a first terminal interface 1414a for electrically connecting a DC-DC module 144 connected to the second power supply, a second terminal interface 1414b connected to the motor control unit 241, a third terminal interface 1414c for connecting the charging port 143, and a fourth terminal interface 1414d for connecting the output end of the first power supply 1411. Inside the high-voltage distribution unit 1414, the first terminal interface 1414a, the second terminal interface 1414b, and the third terminal interface 1414c are respectively connected to the fourth terminal interface 1414d by corresponding wiring terminals. In order to ensure the reliable connection between the fourth terminal interface 1414d and other terminal interfaces, the high-voltage distribution unit 1414 is encapsulated internally, and each connection point is encapsulated inside the high-voltage distribution unit. In this way, the reliability of the electrical connection between the output end of the first power supply 1411 and other units is ensured, while solving the problem of messy external wirings at the output end of the first power supply 1411.

## Claims

1. An all-terrain vehicle (100) comprising:
a frame (11);
a vehicle cover (13) partially connected to the frame (11);
a plurality of wheels (12) comprising two first wheels (121) and two second wheels (122);
a drive system comprising a drive motor (191) for driving at least one of the first wheels (121) or the second wheels (122);
a saddle assembly (15) arranged on the frame (11);
a suspension system (23) comprising a front suspension (231) and a rear suspension (232), the first wheels (121) being connected to the frame (11) by the rear suspension and the second wheels (122) being connected to the frame (11) by the front suspension (231), and the rear suspension (232) comprising a rear rocker arm (2321);
wherein the saddle assembly (15) is locked on the frame (11) in a first saddle state and is unlocked on the frame (11) in a second saddle state; a main power supply (1411) is secured below the saddle assembly (15) when the saddle assembly (15) is in the first saddle state; the saddle assembly (15) comprises a saddle (151) extending substantially in a front-rear direction of the all-terrain vehicle (100); **characterized in that**
a ratio of the length of the saddle (151) to the length of the all-terrain vehicle (100) is in the range from 0.3 to 0.48;
the all-terrain vehicle (100) comprises a power supply system (14) at least partially located below the saddle assembly (15), the power supply system (14) comprising the main power supply (1411) for supplying electric power to the drive motor (191); and
a height direction of the main power supply (1411) extends substantially in an upper-lower direction of the all-terrain vehicle (100); a vertical projection plane is defined as a plane perpendicular to the left-right direction of the all-terrain vehicle (100), a projection of an output shaft of the drive motor (191) projected on the vertical projection plane is defined as a first center point; a projection of an axis of the first wheels (121) projected on the vertical projection plane is defined as a second center point; an angle (α) between a straight line connecting the first center point and the second center point on the vertical projection plane and a projection line of the main power supply (1411) along its height direction projected on the vertical projection plane is in the range from 90° to 120°, and an angle (β) between the projection line of the main power supply (1411) along its height direction projected on the vertical projection plane and a projection of the rear rocker arm (2321) projected on the vertical projection plane is in the range from 90° to 135°; wherein
the saddle assembly (15) comprises a saddle fixing buckle (155), a power supply stopper (156) and a saddle locking hook (153) arranged at the bottom of the saddle (151) substantially arranged along the front-rear direction, and the saddle fixing buckle (155) is arranged in front of the saddle locking hook (153) along the front-rear direction; the power supply stopper (156) is contacted with the main power supply (1411) and prevents the main power supply (1411) from moving in the upper-lower direction when the saddle assembly (15) is in the first saddle state.

2. The all-terrain vehicle (100) of claim 1, wherein the number of the power supply stoppers (156) arranged at the bottom of the saddle (151) is in the range from 1 to 4, and a power supply buffer (1561) is arranged at the end of each power supply stopper (156).

3. The all-terrain vehicle (100) of claim 2, wherein when the saddle assembly (15) is in the first saddle state, the power supply buffer (1561) is compressed, and a ratio of a distance from a contact point where the power supply stopper (156) contacts with the upper surface of the main power supply (1411) to a rear edge of the main power supply (1411) along a front-rear direction to a length of the main power supply (1411) along the front-rear direction is in the range from 0 to 0.50, and a vertical distance from the contact point to a top of the saddle assembly (15) is greater than or equal to 30 mm.

4. The all-terrain vehicle (100) of claim 2,
wherein a horizontal projection plane (107) is defined as a plane perpendicular to the vertical direction, a projection of the main power supply (1411) projected on the horizontal projection plane (107) along the vertical direction is defined as a first projection, a projection of the drive motor (191) projected on the horizontal projection plane (107) along the vertical direction is defined as a second projection, and a projection of the saddle assembly (15) projected on the horizontal projection plane (107) along the vertical direction is defined as a third projection; the area of the first projection is smaller than that of the third projection, and the area of the second projection is smaller than that of the third projection, the first projection and the second projection are both located within the third projection, and the center of the first projection is located in front of the second projection, and the center of the first projection is located in front of the third projection, and the center of the second projection is located in front of the third projection;
wherein an angle between a line connecting the first center point and the second center point on the vertical projection plane and a projection line of the main power supply (1411) along its height direction projected on the vertical projection plane is in a range from 95° to 115°, and an angle between the projection line of the main power supply (1411) along its height direction projected on the vertical projection plane and a projection of the rear rocker arm projected on the vertical projection plane is in a range from 100° to 125°.

5. The all-terrain vehicle (100) of claim 1, wherein the frame (11) comprises a first main beam bracket (1111) comprising two parallel and horizontal beam brackets (1112a), with a saddle support base (1111b) arranged on each horizontal beam bracket (1112a), two ends of a saddle support beam (1111c) are connected to the two saddle support bases (1111b) respectively, and a saddle stopper (1111d) for fixing the saddle (151) is arranged on the saddle support beam (1111c); wherein the saddle support beam (1111c) and the saddle support base (1111b) are connected by means of detachable connection.

6. The all-terrain vehicle (100) of claim 5, wherein the frame (11) comprises a front bracket (112) and a second main beam bracket (1112), one end of the front bracket (112) has a bending section (1113a), the second main beam bracket (1112) comprises a horizontal beam bracket, an angle between the front bracket (112) and the second main beam bracket (1112) is in the range from 0° to 90°, and at least a portion of the bending section (1113a) is parallel to the second main beam bracket (1112) and secured to the second main beam bracket (1112), the bending section (1113a) defines a drainage passage (1113b) along its extension direction at the side secured to the second main beam bracket (1112) to allow a fluid to flow outside, and the drainage passage (1113b) is an arc-shaped passage or a square passage; wherein a convex structure (1113c) is arranged on the side of the bending section (1113a) farther away from the drainage passage (1113b), and the length of the convex structure (1113c) is substantially equal to the length of the drainage passage (1113b).

7. The all-terrain vehicle (100) of claim 6, wherein the frame (11) comprises a drive motor support cradle (192) for securing the drive motor (191), the drive motor support cradle (192) comprises a first drive motor mount rack (1921) and a second drive motor mount rack (1922), and the first drive motor mount rack (1921) comprises two drive motor mounting brackets (1921a), an intermediate connection bracket (1921b) connecting between the drive motor mounting brackets (1921a), and a drive motor fixing bracket (1921c) connected to the intermediate connection bracket (1921b); the second drive motor mount rack (1922) is fixedly connected to the second main beam bracket (1112), with a drive motor fixing bracket (1921c) is arranged on the second main beam bracket (1112); the intermediate connection bracket (1921b) is detachably connected between two drive motor mounting brackets (1921a), and the second drive motor mount rack (1922) is fixedly connected to the second main beam bracket (1112).

8. The all-terrain vehicle (100) of claim 1, wherein the front suspension (231) comprises a first rocker arm assembly (2311) and a second rocker arm assembly (2312), the first rocker arm assembly (2311) is connected to the frame (11) at least partially by a first pivot shaft, and the second rocker arm assembly (2312) is connected to the frame (11) at least partially by a second pivot shaft, a preset plane is defined as a plane where both an axis of the first pivot shaft and an axis of the second pivot shaft are located; the all-terrain vehicle (100) further comprises a brake assembly (171) comprising a first brake assembly (1711), a second brake assembly (1712), a brake caliper (1713), a flow dividing valve (1714) and a three-way brake valve (1715); the three-way brake valve (1715) is located between the first pivot shaft and the second pivot shaft and may be located above or below the preset plane, the distance from the three-way brake valve (1715) and the preset plane is in the range from 0 to 60 mm, and the three-way brake valve (1715) is located at the rear of the front end of the frame (11); wherein the first brake assembly (1711) is connected to the flow dividing valve (1714) by a pipeline, a portion of the second brake assembly (1712) is connected to the flow dividing valve (1714) by a pipeline, and another portion of the second brake assembly (1712) is connected to the three-way brake valve (1715) by a first brake pipe (1715a), the brake assembly (171) comprises a first brake caliper (1713a) and a second brake caliper (1713b), the flow dividing valve (1714) is connected to the first brake caliper (1713a) by a pipeline, and the three-way brake valve (1715) is connected to the second brake caliper (1713b) by a pipeline.

9. The all-terrain vehicle (100) of claim 8, wherein the brake assembly (171) comprises two second brake calipers (1713b), the three-way brake valve (1715) is connected to two second brake calipers (1713b) respectively by a second brake pipe (1715b) and a third brake pipe (1715c), two brake pipe mounting seats (2315) are respectively arranged on the first rocker arm assembly (2311) and the second rocker arm assembly (2312), the second brake pipe (1715b) is secured to the first rocker arm assembly (2311) by the brake pipe mounting seat (2315) on the first rocker arm assembly (2311), the third brake pipe (1715c) is secured to the second rocker arm assembly (2312) by the brake pipe mounting seat (2315) on the second rocker arm assembly (2312).

10. The all-terrain vehicle (100) of claim 8, wherein the second brake assembly (1712) is a hand-operated brake device (1718a), the second brake assembly (1712) controls the first brake caliper (1713a) by the flow dividing valve (1714), and the second brake assembly (1712) controls the second brake caliper (1713b) by the three-way brake valve (1715).

11. The all-terrain vehicle (100) of claim 8, wherein the first brake assembly (1711) is a foot-operated brake device (1718b), and the first brake assembly (1711) controls the first brake caliper (1713a) by the flow dividing valve (1714), wherein the first brake assembly (1711) and the second brake assembly (1712) further respectively comprise a brake fluid reservoir (1717) for storing brake fluid, a delivery pump (1716) for delivering the brake fluid, and a brake operating mechanism (1718) for controlling the delivery pump (1716).

12. The all-terrain vehicle (100) of claim 1, wherein the vehicle cover (13) further comprises a rear fender (132) arranged at the rear end of the frame (11); the saddle assembly (15) further comprises a saddle locking hook (153), a limit device matched with the saddle locking hook (153) is arranged below the rear fender (132), and the rear fender (132) also defines an opening for at least portion of the saddle locking hook (153) to pass through; the saddle assembly (15) is in the first saddle state when the saddle locking hook (153) passes through the opening and is matched with the limit device; wherein a vertical distance (L5) from the bottom of the saddle locking hook (153) to a top of the rear fender (132) is in the range from 80 mm to 320 mm when the saddle assembly (15) is in the first saddle state; wherein a vertical distance (L5) from the bottom of the saddle locking hook (153) to a top of the rear fender (132) is in the range from 100 mm to 300 mm when the saddle assembly (15) is in the first saddle state.

13. The all-terrain vehicle (100) of claim 12, wherein a horizontal distance (L6) from the saddle locking hook (153) to a tail edge of the rear fender (132) is in the range from 0 to 500 mm when the saddle assembly (15) is in the first saddle state.

14. The all-terrain vehicle (100) of claim 12, wherein the saddle locking hook (153) comprises a hook mounting base (1531) fixed at the bottom of the saddle (151), a lock hook (1532) for locking and unlocking the saddle (151), a pin shaft and a torsion spring, the lock hook (1532) is rotatably fixed on the hook mounting base (1531) by the torsion spring and the pin shaft; a limit device matched with the hook is secured to the frame (11); wherein the lock hook (1532) comprises a hook body (1532a), a locking groove (1532b) defined on the hook body (1532a) and an operation section (1532c) arranged on the hook body (1532a) for the driver to operate; wherein the locking groove (1532b) defines a locking groove opening (1532d) facing forward, the operation section (1532c) is below the locking groove (1532b), and the operation section (1532c) is arranged on the same side of the locking groove opening (1532d).

15. The all-terrain vehicle (100) of claim 1, further comprising a control unit (24) for controlling the drive system; the saddle assembly (15) comprises a pressure sensor (1522), a temperature sensor, and a heating component (1523), the pressure sensor (1522), the temperature sensor, and the heating component (1523) are electrically connected to the control unit (24); the control unit (24) controls the heating component (1523) to stop heating when a temperature signal output by the temperature sensor to the control unit (24) indicates the temperature is greater than a preset threshold, the control unit (24) controls the heating component (1523) to heat the saddle (151) when a temperature signal output by the temperature sensor to the control unit (24) indicates the temperature is less than or equal to a preset threshold; the pressure sensor (1522) outputs a first signal value to the control unit (24) to control the heating component (1523) to stop a first heating state, the pressure sensor (1522) outputs a second signal value to the control unit (24) to control the heating component (1523) to heat the saddle (151) in a second state; the control unit (24) controls the heating component (1523) to heat the saddle (151) when a temperature signal output by the temperature sensor to the control unit (24) indicates the temperature is less than or equal to a preset threshold and when the pressure sensor (1522) outputs a second signal value to the control unit (24); wherein the control unit (24) further comprises a remote interaction unit that can be connected to a remote terminal, the remote interaction unit receives signals from the remote terminal and outputs remote signals to the control unit (24), the control unit (24) controls the heating component (1523) to heat the saddle (151) according to the signals; wherein when the pressure sensor (1522) is in a first pressure state, but the control unit (24) detects that the all-terrain vehicle (100) is in an unlocked state or the all-terrain vehicle (100) is in a non-parking state, the control unit (24) controls the all-terrain vehicle (100) to send a reminder and/or controls the remote interaction unit to send a reminder to the remote terminal.

## Patentansprüche

1. Geländefahrzeug (100), umfassend:
einen Rahmen (11);
eine Fahrzeugverkleidung (13), die teilweise mit dem Rahmen (11) verbunden ist;
eine Mehrzahl von Rädern (12), umfassend zwei erste Räder (121) und zwei zweite Räder (122);
ein Antriebssystem, umfassend einen Antriebsmotor (191) zum Antreiben wenigstens eines der ersten Räder (121) oder der zweiten Räder (122);
eine Sattelanordnung (15), die am Rahmen (11) angeordnet ist;
ein Federungssystem (23), umfassend eine Vorderfederung (231) und eine Hinterfederung (232), wobei die ersten Räder (121) durch die Hinterfederung (232) mit dem Rahmen (11) verbunden sind und die zweiten Räder (122) durch die Vorderfederung (231) mit dem Rahmen (11) verbunden sind, und wobei die Hinterfederung (232) einen hinteren Kipphebelarm (2321) umfasst;
wobei die Sattelanordnung (15) in einem ersten Sattelzustand am Rahmen (11) verriegelt ist und in einem zweiten Sattelzustand am Rahmen (11) entriegelt ist; wobei eine Hauptstromversorgung (1411) unterhalb der Sattelanordnung (15) befestigt ist, wenn die Sattelanordnung (15) in dem ersten Sattelzustand ist; wobei die Sattelanordnung (15) einen Sattel (151) umfasst, der sich im Wesentlichen in einer Vorder-Hinter-Richtung des Geländefahrzeugs (100) erstreckt; **dadurch gekennzeichnet, dass**
ein Verhältnis der Länge des Sattels (151) zur Länge des Geländefahrzeugs (100) im Bereich von 0.3 bis 0.48 liegt;
das Geländefahrzeug (100) ein Stromversorgungssystem (14) umfasst, das zumindest teilweise unterhalb der Sattelanordnung (15) angeordnet ist, wobei das Stromversorgungssystem (14) die Hauptstromversorgung (1411) zum Liefern elektrischer Leistung an den Antriebsmotor (191) umfasst; und
eine Höhenrichtung der Hauptstromversorgung (1411) sich im Wesentlichen in einer Oben-Unten-Richtung des Geländefahrzeugs (100) erstreckt; wobei eine vertikale Projektionsebene als eine Ebene definiert ist, die senkrecht zu einer Links-Rechts-Richtung des Geländefahrzeugs (100) ist, wobei eine Projektion einer Abtriebswelle des Antriebsmotors (191), projiziert auf die vertikale Projektionsebene, als ein erster Mittelpunkt definiert ist; wobei eine Projektion einer Achse der ersten Räder (121), projiziert auf die vertikale Projektionsebene, als ein zweiter Mittelpunkt definiert ist; wobei ein Winkel (α) zwischen einer Geraden, die den ersten Mittelpunkt und den zweiten Mittelpunkt auf der vertikalen Projektionsebene verbindet, und einer Projektionslinie der Hauptstromversorgung (1411) entlang ihrer Höhenrichtung, projiziert auf die vertikale Projektionsebene, im Bereich von 90° bis 120° liegt, und ein Winkel (β) zwischen der Projektionslinie der Hauptstromversorgung (1411) entlang ihrer Höhenrichtung, projiziert auf die vertikale Projektionsebene, und einer Projektion des hinteren Kipphebelarms (2321), projiziert auf die vertikale Projektionsebene, im Bereich von 90° bis 135° liegt; wobei
die Sattelanordnung (15) eine Sattelbefestigungsschnalle (155), einen Stromversorgungsanschlag (156) und einen Sattelverriegelungshaken (153) umfasst, die an der Unterseite des Sattels (151) im Wesentlichen entlang der Vorder-Hinter-Richtung angeordnet sind, und wobei die Sattelbefestigungsschnalle (155) entlang der Vorder-Hinter-Richtung vor dem Sattelverriegelungshaken (153) angeordnet ist; wobei der Stromversorgungsanschlag (156) die Hauptstromversorgung (1411) berührt und verhindert, dass sich die Hauptstromversorgung (1411) in der Oben-Unten-Richtung bewegt, wenn die Sattelanordnung (15) in dem ersten Sattelzustand ist.

2. Geländefahrzeug (100) nach Anspruch 1, wobei die Anzahl der an der Unterseite des Sattels (151) angeordneten Stromversorgungsanschläge (156) im Bereich von 1 bis 4 liegt, und wobei an dem Ende jedes Stromversorgungsanschlags (156) ein Stromversorgungs-Puffer (1561) angeordnet ist.

3. Geländefahrzeug (100) nach Anspruch 2, wobei, wenn die Sattelanordnung (15) in dem ersten Sattelzustand ist, der Stromversorgungs-Puffer (1561) komprimiert ist, und wobei ein Verhältnis aus einem Abstand von einem Kontaktpunkt, an dem der Stromversorgungsanschlag (156) eine Oberseite der Hauptstromversorgung (1411) berührt, bis zu einer hinteren Kante der Hauptstromversorgung (1411) entlang einer Vorder-Hinter-Richtung, zu einer Länge der Hauptstromversorgung (1411) entlang der Vorder-Hinter-Richtung im Bereich von 0 bis 0.50 liegt, und wobei ein vertikaler Abstand von dem Kontaktpunkt bis zu einer Oberseite der Sattelanordnung (15) größer als oder gleich 30 mm ist.

4. Geländefahrzeug (100) nach Anspruch 2, wobei eine horizontale Projektionsebene (107) als eine Ebene definiert ist, die senkrecht zu der Vertikalrichtung ist, wobei eine Projektion der Hauptstromversorgung (1411), entlang der Vertikalrichtung auf die horizontale Projektionsebene (107) projiziert, als eine erste Projektion definiert ist, wobei eine Projektion des Antriebsmotors (191), entlang der Vertikalrichtung auf die horizontale Projektionsebene (107) projiziert, als eine zweite Projektion definiert ist, und wobei eine Projektion der Sattelanordnung (15), entlang der Vertikalrichtung auf die horizontale Projektionsebene (107) projiziert, als eine dritte Projektion definiert ist; wobei die Fläche der ersten Projektion kleiner als die der dritten Projektion ist und die Fläche der zweiten Projektion kleiner als die der dritten Projektion ist, wobei die erste Projektion und die zweite Projektion beide innerhalb der dritten Projektion liegen, und wobei der Mittelpunkt der ersten Projektion vor der zweiten Projektion liegt, und der Mittelpunkt der ersten Projektion vor der dritten Projektion liegt, und der Mittelpunkt der zweiten Projektion vor der dritten Projektion liegt;
wobei ein Winkel zwischen einer Linie, die den ersten Mittelpunkt und den zweiten Mittelpunkt auf der vertikalen Projektionsebene verbindet, und einer Projektionslinie der Hauptstromversorgung (1411) entlang ihrer Höhenrichtung, projiziert auf die vertikale Projektionsebene, im Bereich von 95° bis 115° liegt, und wobei ein Winkel zwischen der Projektionslinie der Hauptstromversorgung (1411) entlang ihrer Höhenrichtung, projiziert auf die vertikale Projektionsebene, und einer Projektion des hinteren Kipphebelarms, projiziert auf die vertikale Projektionsebene, im Bereich von 100° bis 125° liegt.

5. Geländefahrzeug (100) nach Anspruch 1, wobei der Rahmen (11) eine erste Hauptträgerhalterung (1111) umfasst, die zwei parallele und horizontale Trägerhalterungen (1112a) umfasst, wobei auf jeder horizontalen Trägerhalterung (1112a) eine Sattelstützbasis (1111b) angeordnet ist, wobei zwei Enden eines Sattelstützträgers (1111c) jeweils mit den zwei Sattelstützbasen (1111b) verbunden sind, und wobei an dem Sattelstützträger (1111c) ein Sattelanschlag (1111d) zum Fixieren des Sattels (151) angeordnet ist; wobei der Sattelstützträger (1111c) und die Sattelstützbasis (1111b) mittels einer lösbaren Verbindung miteinander verbunden sind.

6. Geländefahrzeug (100) nach Anspruch 5, wobei der Rahmen (11) eine Fronthalterung (112) und eine zweite Hauptträgerhalterung (1112) umfasst, wobei ein Ende der Fronthalterung (112) einen Biegebereich (1113a) aufweist, wobei die zweite Hauptträgerhalterung (1112) eine horizontale Trägerhalterung umfasst, wobei ein Winkel zwischen der Fronthalterung (112) und der zweiten Hauptträgerhalterung (1112) im Bereich von 0° bis 90° liegt, und wobei zumindest ein Teil des Biegebereichs (1113a) parallel zu der zweiten Hauptträgerhalterung (1112) ist und an der zweiten Hauptträgerhalterung (1112) befestigt ist, wobei der Biegebereich (1113a) an der an der zweiten Hauptträgerhalterung (1112) befestigten Seite entlang seiner Erstreckungsrichtung eine Entwässerungspassage (1113b) definiert, um zu ermöglichen, dass ein Fluid nach außen abfließt, und wobei die Entwässerungspassage (1113b) eine bogenförmige Passage oder eine quadratische Passage ist; wobei eine Konvexstruktur (1113c) an der von der Entwässerungspassage (1113b) weiter entfernten Seite des Biegebereichs (1113a) angeordnet ist, und wobei die Länge der Konvexstruktur (1113c) im Wesentlichen gleich der Länge der Entwässerungspassage (1113b) ist.

7. Geländefahrzeug (100) nach Anspruch 6, wobei der Rahmen (11) eine Antriebsmotor-Stützwiege (192) zum Befestigen des Antriebsmotors (191) umfasst, wobei die Antriebsmotor-Stützwiege (192) einen ersten Antriebsmotor-Montagerahmen (1921) und einen zweiten Antriebsmotor-Montagerahmen (1922) umfasst, und wobei der erste Antriebsmotor-Montagerahmen (1921) zwei Antriebsmotor-Montagehalterungen (1921a), eine Zwischenverbindungshalterung (1921b), die zwischen den Antriebsmotor-Montagehalterungen (1921a) verbindet, und eine Antriebsmotor-Befestigungshalterung (1921c), die mit der Zwischenverbindungshalterung (1921b) verbunden ist, umfasst; wobei der zweite Antriebsmotor-Montagerahmen (1922) fest mit der zweiten Hauptträgerhalterung (1112) verbunden ist, wobei an der zweiten Hauptträgerhalterung (1112) eine Antriebsmotor-Befestigungshalterung (1921c) angeordnet ist; wobei die Zwischenverbindungshalterung (1921b) lösbar zwischen den zwei Antriebsmotor-Montagehalterungen (1921a) verbunden ist, und wobei der zweite Antriebsmotor-Montagerahmen (1922) fest mit der zweiten Hauptträgerhalterung (1112) verbunden ist.

8. Geländefahrzeug (100) nach Anspruch 1, wobei die Vorderfederung (231) eine erste Kipphebelarmbaugruppe (2311) und eine zweite Kipphebelarmbaugruppe (2312) umfasst, wobei die erste Kipphebelarmbaugruppe (2311) zumindest teilweise mittels eines ersten Drehbolzens mit dem Rahmen (11) verbunden ist und die zweite Kipphebelarmbaugruppe (2312) zumindest teilweise mittels eines zweiten Drehbolzens mit dem Rahmen (11) verbunden ist, wobei eine vorgegebene Ebene als eine Ebene definiert ist, in der sowohl eine Achse des ersten Drehbolzens als auch eine Achse des zweiten Drehbolzens liegen; wobei das Geländefahrzeug (100) ferner eine Bremsanordnung (171) umfasst, die eine erste Bremsanordnung (1711), eine zweite Bremsanordnung (1712), einen Bremssattel (1713), ein Durchflussverteilventil (1714) und ein Dreiwege-Bremsventil (1715) umfasst; wobei das Dreiwege-Bremsventil (1715) zwischen dem ersten Drehbolzen und dem zweiten Drehbolzen angeordnet ist und oberhalb oder unterhalb der vorgegebenen Ebene angeordnet sein kann, wobei ein Abstand zwischen dem Dreiwege-Bremsventil (1715) und der vorgegebenen Ebene im Bereich von 0 bis 60 mm liegt, und wobei das Dreiwege-Bremsventil (1715) hinter einem vorderen Ende des Rahmens (11) angeordnet ist; wobei die erste Bremsanordnung (1711) über eine Leitung mit dem Durchflussverteilventil (1714) verbunden ist, ein Teil der zweiten Bremsanordnung (1712) über eine Leitung mit dem Durchflussverteilventil (1714) verbunden ist und ein anderer Teil der zweiten Bremsanordnung (1712) über eine erste Bremsleitung (1715a) mit dem Dreiwege-Bremsventil (1715) verbunden ist, wobei die Bremsanordnung (171) einen ersten Bremssattel (1713a) und einen zweiten Bremssattel (1713b) umfasst, wobei das Durchflussverteilventil (1714) über eine Leitung mit dem ersten Bremssattel (1713a) verbunden ist, und wobei das Dreiwege-Bremsventil (1715) über eine Leitung mit dem zweiten Bremssattel (1713b) verbunden ist.

9. Geländefahrzeug (100) nach Anspruch 8, wobei die Bremsanordnung (171) zwei zweite Bremssättel (1713b) umfasst, wobei das Dreiwege-Bremsventil (1715) über eine zweite Bremsleitung (1715b) bzw. eine dritte Bremsleitung (1715c) jeweils mit den zwei zweiten Bremssätteln (1713b) verbunden ist, wobei jeweils ein Bremsleitungs-Befestigungssitz (2315) an der ersten Kipphebelarmbaugruppe (2311) bzw. an der zweiten Kipphebelarmbaugruppe (2312) angeordnet ist, wobei die zweite Bremsleitung (1715b) mittels des Bremsleitungs-Befestigungssitzes (2315) an der ersten Kipphebelarmbaugruppe (2311) an der ersten Kipphebelarmbaugruppe (2311) befestigt ist, und wobei die dritte Bremsleitung (1715c) mittels des Bremsleitungs-Befestigungssitzes (2315) an der zweiten Kipphebelarmbaugruppe (2312) an der zweiten Kipphebelarmbaugruppe (2312) befestigt ist.

10. Geländefahrzeug (100) nach Anspruch 8, wobei die zweite Bremsanordnung (1712) eine handbetätigte Bremsvorrichtung (1718a) ist, wobei die zweite Bremsanordnung (1712) den ersten Bremssattel (1713a) mittels des Durchflussverteilventils (1714) steuert, und wobei die zweite Bremsanordnung (1712) den zweiten Bremssattel (1713b) mittels des Dreiwege-Bremsventils (1715) steuert.

11. Geländefahrzeug (100) nach Anspruch 8, wobei die erste Bremsanordnung (1711) eine fußbetätigte Bremsvorrichtung (1718b) ist, und wobei die erste Bremsanordnung (1711) den ersten Bremssattel (1713a) mittels des Durchflussverteilventils (1714) steuert, wobei die erste Bremsanordnung (1711) und die zweite Bremsanordnung (1712) ferner jeweils einen Bremsflüssigkeitsbehälter (1717) zum Speichern von Bremsflüssigkeit, eine Förderpumpe (1716) zum Fördern der Bremsflüssigkeit und einen Bremsbetätigungsmechanismus (1718) zum Steuern der Förderpumpe (1716) umfassen.

12. Geländefahrzeug (100) nach Anspruch 1, wobei die Fahrzeugverkleidung (13) ferner einen am hinteren Ende des Rahmens (11) angeordneten hinteren Kotflügel (132) umfasst; wobei die Sattelanordnung (15) ferner einen Sattelverriegelungshaken (153) umfasst, wobei unterhalb des hinteren Kotflügels (132) eine zu dem Sattelverriegelungshaken (153) passende Begrenzungseinrichtung angeordnet ist, und wobei der hintere Kotflügel (132) ferner eine Öffnung definiert, durch die zumindest ein Teil des Sattelverriegelungshakens (153) hindurchgeführt werden kann; wobei die Sattelanordnung (15) in dem ersten Sattelzustand ist, wenn der Sattelverriegelungshaken (153) durch die Öffnung hindurchgeführt ist und mit der Begrenzungseinrichtung zusammenwirkt; wobei ein vertikaler Abstand (L5) von der Unterseite des Sattelverriegelungshakens (153) bis zu einer Oberseite des hinteren Kotflügels (132) im Bereich von 80 mm bis 320 mm liegt, wenn die Sattelanordnung (15) in dem ersten Sattelzustand ist; wobei ein vertikaler Abstand (L5) von der Unterseite des Sattelverriegelungshakens (153) bis zu einer Oberseite des hinteren Kotflügels (132) im Bereich von 100 mm bis 300 mm liegt, wenn die Sattelanordnung (15) in dem ersten Sattelzustand ist.

13. Geländefahrzeug (100) nach Anspruch 12, wobei ein horizontaler Abstand (L6) von dem Sattelverriegelungshaken (153) bis zu einer Heckkante des hinteren Kotflügels (132) im Bereich von 0 bis 500 mm liegt, wenn die Sattelanordnung (15) in dem ersten Sattelzustand ist.

14. Geländefahrzeug (100) nach Anspruch 12, wobei der Sattelverriegelungshaken (153) eine an der Unterseite des Sattels (151) befestigte Hakenmontagebasis (1531), einen Verriegelungshaken (1532) zum Verriegeln und Entriegeln des Sattels (151), einen Bolzen und eine Torsionsfeder umfasst, wobei der Verriegelungshaken (1532) durch die Torsionsfeder und den Bolzen drehbar an der Hakenmontagebasis (1531) befestigt ist; wobei eine zu dem Haken passende Begrenzungseinrichtung am Rahmen (11) befestigt ist; wobei der Verriegelungshaken (1532) einen Hakenkörper (1532a), eine am Hakenkörper (1532a) definierte Verriegelungsnut (1532b) und einen am Hakenkörper (1532a) angeordneten Betätigungsabschnitt (1532c) zum Betätigen durch den Fahrer umfasst; wobei die Verriegelungsnut (1532b) eine nach vorne gerichtete Öffnung der Verriegelungsnut (1532d) definiert, wobei der Betätigungsabschnitt (1532c) unterhalb der Verriegelungsnut (1532b) angeordnet ist und wobei der Betätigungsabschnitt (1532c) an derselben Seite der Öffnung der Verriegelungsnut (1532d) angeordnet ist.

15. Geländefahrzeug (100) nach Anspruch 1, ferner umfassend eine Steuereinheit (24) zum Steuern des Antriebssystems; wobei die Sattelanordnung (15) einen Drucksensor (1522), einen Temperatursensor und ein Heizelement (1523) umfasst, wobei der Drucksensor (1522), der Temperatursensor und das Heizelement (1523) elektrisch mit der Steuereinheit (24) verbunden sind; wobei die Steuereinheit (24) das Heizelement (1523) so steuert, dass das Heizen beendet wird, wenn ein vom Temperatursensor an die Steuereinheit (24) ausgegebenes Temperatursignal anzeigt, dass die Temperatur größer als ein vorgegebener Schwellenwert ist, und wobei die Steuereinheit (24) das Heizelement (1523) so steuert, dass der Sattel (151) beheizt wird, wenn ein vom Temperatursensor an die Steuereinheit (24) ausgegebenes Temperatursignal anzeigt, dass die Temperatur kleiner als oder gleich dem vorgegebenen Schwellenwert ist; wobei der Drucksensor (1522) einen ersten Signalwert an die Steuereinheit (24) ausgibt, um das Heizelement (1523) zu steuern, einen ersten Heizzustand zu beenden, und wobei der Drucksensor (1522) einen zweiten Signalwert an die Steuereinheit (24) ausgibt, um das Heizelement (1523) zu steuern, den Sattel (151) in einem zweiten Zustand zu beheizen; wobei die Steuereinheit (24) das Heizelement (1523) zum Beheizen des Sattels (151) steuert, wenn ein vom Temperatursensor an die Steuereinheit (24) ausgegebenes Temperatursignal anzeigt, dass die Temperatur kleiner als oder gleich dem vorgegebenen Schwellenwert ist und wenn der Drucksensor (1522) den zweiten Signalwert an die Steuereinheit (24) ausgibt; wobei die Steuereinheit (24) ferner eine Ferninteraktionseinheit umfasst, die mit einem Fernendgerät verbindbar ist, wobei die Ferninteraktionseinheit Signale von dem Fernendgerät empfängt und Fernsignale an die Steuereinheit (24) ausgibt, und wobei die Steuereinheit (24) das Heizelement (1523) entsprechend den Signalen zum Beheizen des Sattels (151) steuert; wobei, wenn sich der Drucksensor (1522) in einem ersten Druckzustand befindet, die Steuereinheit (24) jedoch feststellt, dass sich das Geländefahrzeug (100) in einem entriegelten Zustand befindet oder sich das Geländefahrzeug (100) in einem Nicht-Parkzustand befindet, die Steuereinheit (24) das Geländefahrzeug (100) so steuert, dass eine Erinnerung ausgegeben wird und/oder die Ferninteraktionseinheit so steuert, dass eine Erinnerung an das Fernendgerät gesendet wird.

## Revendications

1. Véhicule tout-terrain (100) comprenant :
un châssis (11) ;
un carénage de véhicule (13) partiellement relié au châssis (11) ;
une pluralité de roues (12) comprenant deux premières roues (121) et deux secondes roues (122) ;
un système d'entraînement comprenant un moteur d'entraînement (191) pour entraîner au moins l'une des premières roues (121) ou des secondes roues (122) ;
un ensemble de selle (15) disposé sur le châssis (11) ;
un système de suspension (23) comprenant une suspension avant (231) et une suspension arrière (232), les premières roues (121) étant reliées au châssis (11) par la suspension arrière (232) et les secondes roues (122) étant reliées au châssis (11) par la suspension avant (231), et la suspension arrière (232) comprenant un bras basculeur arrière (2321) ;
dans lequel l'ensemble de selle (15) est verrouillé sur le châssis (11) dans un premier état de selle et est déverrouillé sur le châssis (11) dans un second état de selle ; une alimentation principale (1411) est fixée au-dessous de l'ensemble de selle (15) lorsque l'ensemble de selle (15) est dans le premier état de selle ; l'ensemble de selle (15) comprend une selle (151) s'étendant sensiblement selon une direction avant-arrière du véhicule tout-terrain (100); **caractérisé en ce que**
un rapport de la longueur de la selle (151) à la longueur du véhicule tout-terrain (100) est dans une plage de 0.3 à 0.48 ;
le véhicule tout-terrain (100) comprend un système d'alimentation électrique (14) situé au moins partiellement au-dessous de l'ensemble de selle (15), le système d'alimentation électrique (14) comprenant l'alimentation principale (1411) pour fournir une puissance électrique au moteur d'entraînement (191) ; et
une direction de hauteur de l'alimentation principale (1411) s'étend sensiblement selon une direction haut-bas du véhicule tout-terrain (100) ; un plan de projection vertical est défini comme un plan perpendiculaire à la direction gauche-droite du véhicule tout-terrain (100), une projection d'un arbre de sortie du moteur d'entraînement (191) projetée sur le plan de projection vertical est définie comme un premier point central ; une projection d'un axe des premières roues (121) projetée sur le plan de projection vertical est définie comme un deuxième point central ; un angle (α) entre une droite reliant le premier point central et le deuxième point central sur le plan de projection vertical et une ligne de projection de l'alimentation principale (1411) selon sa direction de hauteur projetée sur le plan de projection vertical est dans une plage de 90° à 120°, et un angle (β) entre la ligne de projection de l'alimentation principale (1411) selon sa direction de hauteur projetée sur le plan de projection vertical et une projection du bras basculeur arrière (2321) projetée sur le plan de projection vertical est dans une plage de 90° à 135° ; dans lequel
l'ensemble de selle (15) comprend une boucle de fixation de selle (155), une butée d'alimentation (156) et un crochet de verrouillage de selle (153) disposés au fond de la selle (151) et disposés sensiblement le long de la direction avant-arrière, et la boucle de fixation de selle (155) est disposée en avant du crochet de verrouillage de selle (153) selon la direction avant-arrière ; la butée d'alimentation (156) est en contact avec l'alimentation principale (1411) et empêche l'alimentation principale (1411) de se déplacer selon la direction haut-bas lorsque l'ensemble de selle (15) est dans le premier état de selle.

2. Véhicule tout-terrain (100) selon la revendication 1, dans lequel le nombre de butées d'alimentation (156) disposées au fond de la selle (151) est dans une plage de 1 à 4, et un tampon d'alimentation (1561) est disposé à l'extrémité de chaque butée d'alimentation (156).

3. Véhicule tout-terrain (100) selon la revendication 2, dans lequel, lorsque l'ensemble de selle (15) est dans le premier état de selle, le tampon d'alimentation (1561) est comprimé, et un rapport entre une distance, selon la direction avant-arrière, entre un point de contact où la butée d'alimentation (156) est en contact avec la surface supérieure de l'alimentation principale (1411) et un bord arrière de l'alimentation principale (1411), et une longueur de l'alimentation principale (1411) selon la direction avant-arrière est dans une plage de 0 à 0.50, et une distance verticale du point de contact au sommet de l'ensemble de selle (15) est supérieure ou égale à 30 mm.

4. Véhicule tout-terrain (100) selon la revendication 2, dans lequel un plan de projection horizontal (107) est défini comme un plan perpendiculaire à la direction verticale, une projection de l'alimentation principale (1411) projetée sur le plan de projection horizontal (107) selon la direction verticale est définie comme une première projection, une projection du moteur d'entraînement (191) projetée sur le plan de projection horizontal (107) selon la direction verticale est définie comme une deuxième projection, et une projection de l'ensemble de selle (15) projetée sur le plan de projection horizontal (107) selon la direction verticale est définie comme une troisième projection ; l'aire de la première projection est inférieure à celle de la troisième projection, et l'aire de la deuxième projection est inférieure à celle de la troisième projection, la première projection et la deuxième projection étant toutes deux situées à l'intérieur de la troisième projection, et le centre de la première projection est situé en avant de la deuxième projection, et le centre de la première projection est situé en avant de la troisième projection, et le centre de la deuxième projection est situé en avant de la troisième projection ;
dans lequel un angle entre une ligne reliant le premier point central et le deuxième point central sur le plan de projection vertical et une ligne de projection de l'alimentation principale (1411) selon sa direction de hauteur projetée sur le plan de projection vertical est dans une plage de 95° à 115°, et un angle entre la ligne de projection de l'alimentation principale (1411) selon sa direction de hauteur projetée sur le plan de projection vertical et une projection du bras basculeur arrière projetée sur le plan de projection vertical est dans une plage de 100° à 125°.

5. Véhicule tout-terrain (100) selon la revendication 1, dans lequel le châssis (11) comprend un premier support de poutre principale (1111) comprenant deux supports de poutre (1112a) parallèles et horizontaux, une base de support de selle (1111b) étant disposée sur chaque support de poutre horizontal (1112a), deux extrémités d'une poutre de support de selle (1111c) étant reliées respectivement aux deux bases de support de selle (1111b), et une butée de selle (1111d) pour fixer la selle (151) étant disposée sur la poutre de support de selle (1111c) ; dans lequel la poutre de support de selle (1111c) et la base de support de selle (1111b) sont reliées au moyen d'une connexion démontable.

6. Véhicule tout-terrain (100) selon la revendication 5, dans lequel le châssis (11) comprend un support avant (112) et un deuxième support de poutre principale (1112), une extrémité du support avant (112) ayant une section de pliage (1113a), le deuxième support de poutre principale (1112) comprenant un support de poutre horizontal, un angle entre le support avant (112) et le deuxième support de poutre principale (1112) étant dans une plage de 0° à 90°, et au moins une partie de la section de pliage (1113a) étant parallèle au deuxième support de poutre principale (1112) et fixée au deuxième support de poutre principale (1112), la section de pliage (1113a) définissant un passage de drainage (1113b) le long de sa direction d'extension sur le côté fixé au deuxième support de poutre principale (1112) afin de permettre à un fluide de s'écouler vers l'extérieur, et le passage de drainage (1113b) étant un passage en forme d'arc ou un passage carré ; dans lequel une structure convexe (1113c) est disposée sur le côté de la section de pliage (1113a) le plus éloigné du passage de drainage (1113b), et la longueur de la structure convexe (1113c) est sensiblement égale à la longueur du passage de drainage (1113b).

7. Véhicule tout-terrain (100) selon la revendication 6, dans lequel le châssis (11) comprend un berceau de support de moteur d'entraînement (192) pour fixer le moteur d'entraînement (191), le berceau de support de moteur d'entraînement (192) comprenant un premier cadre de montage de moteur d'entraînement (1921) et un deuxième cadre de montage de moteur d'entraînement (1922), et le premier cadre de montage de moteur d'entraînement (1921) comprenant deux supports de montage de moteur d'entraînement (1921a), un support de connexion intermédiaire (1921b) reliant les supports de montage de moteur d'entraînement (1921a), et un support de fixation de moteur d'entraînement (1921c) relié au support de connexion intermédiaire (1921b) ; le deuxième cadre de montage de moteur d'entraînement (1922) étant relié de manière fixe au deuxième support de poutre principale (1112), un support de fixation de moteur d'entraînement (1921c) étant disposé sur le deuxième support de poutre principale (1112) ; le support de connexion intermédiaire (1921b) étant relié de manière démontable entre les deux supports de montage de moteur d'entraînement (1921a), et le deuxième cadre de montage de moteur d'entraînement (1922) étant relié de manière fixe au deuxième support de poutre principale (1112).

8. Véhicule tout-terrain (100) selon la revendication 1, dans lequel la suspension avant (231) comprend un premier ensemble de bras basculeur (2311) et un deuxième ensemble de bras basculeur (2312), le premier ensemble de bras basculeur (2311) étant relié au châssis (11) au moins partiellement par un premier axe de pivot, et le deuxième ensemble de bras basculeur (2312) étant relié au châssis (11) au moins partiellement par un deuxième axe de pivot, un plan prédéfini étant défini comme un plan dans lequel sont situés à la fois un axe du premier axe de pivot et un axe du deuxième axe de pivot ; le véhicule tout-terrain (100) comprenant en outre un ensemble de freinage (171) comprenant un premier ensemble de frein (1711), un deuxième ensemble de frein (1712), un étrier de frein (1713), une vanne de répartition de débit (1714) et une vanne de frein à trois voies (1715) ; la vanne de frein à trois voies (1715) étant située entre le premier axe de pivot et le deuxième axe de pivot et pouvant être située au-dessus ou au-dessous du plan prédéfini, la distance entre la vanne de frein à trois voies (1715) et le plan prédéfini étant dans une plage de 0 à 60 mm, et la vanne de frein à trois voies (1715) étant située à l'arrière de l'extrémité avant du châssis (11) ; dans lequel le premier ensemble de frein (1711) est relié à la vanne de répartition de débit (1714) par une conduite, une partie du deuxième ensemble de frein (1712) est reliée à la vanne de répartition de débit (1714) par une conduite, et une autre partie du deuxième ensemble de frein (1712) est reliée à la vanne de frein à trois voies (1715) par une première conduite de frein (1715a), l'ensemble de freinage (171) comprenant un premier étrier de frein (1713a) et un deuxième étrier de frein (1713b), la vanne de répartition de débit (1714) étant reliée au premier étrier de frein (1713a) par une conduite, et la vanne de frein à trois voies (1715) étant reliée au deuxième étrier de frein (1713b) par une conduite.

9. Véhicule tout-terrain (100) selon la revendication 8, dans lequel l'ensemble de freinage (171) comprend deux deuxièmes étriers de frein (1713b), la vanne de frein à trois voies (1715) étant reliée aux deux deuxièmes étriers de frein (1713b) respectivement par une deuxième conduite de frein (1715b) et une troisième conduite de frein (1715c), deux sièges de fixation de conduite de frein (2315) étant respectivement disposés sur le premier ensemble de bras basculeur (2311) et le deuxième ensemble de bras basculeur (2312), la deuxième conduite de frein (1715b) étant fixée au premier ensemble de bras basculeur (2311) par le siège de fixation de conduite de frein (2315) sur le premier ensemble de bras basculeur (2311), la troisième conduite de frein (1715c) étant fixée au deuxième ensemble de bras basculeur (2312) par le siège de fixation de conduite de frein (2315) sur le deuxième ensemble de bras basculeur (2312).

10. Véhicule tout-terrain (100) selon la revendication 8, dans lequel le deuxième ensemble de frein (1712) est un dispositif de frein à main (1718a), le deuxième ensemble de frein (1712) commandant le premier étrier de frein (1713a) par la vanne de répartition de débit (1714), et le deuxième ensemble de frein (1712) commandant le deuxième étrier de frein (1713b) par la vanne de frein à trois voies (1715).

11. Véhicule tout-terrain (100) selon la revendication 8, dans lequel le premier ensemble de frein (1711) est un dispositif de frein à pied (1718b), et le premier ensemble de frein (1711) commande le premier étrier de frein (1713a) par la vanne de répartition de débit (1714), dans lequel le premier ensemble de frein (1711) et le deuxième ensemble de frein (1712) comprennent en outre respectivement un réservoir de liquide de frein (1717) pour stocker du liquide de frein, une pompe d'alimentation (1716) pour délivrer le liquide de frein, et un mécanisme d'actionnement de frein (1718) pour commander la pompe d'alimentation (1716).

12. Véhicule tout-terrain (100) selon la revendication 1, dans lequel le carénage de véhicule (13) comprend en outre un garde-boue arrière (132) disposé à l'extrémité arrière du châssis (11) ; l'ensemble de selle (15) comprend en outre un crochet de verrouillage de selle (153), un dispositif de limitation coopérant avec le crochet de verrouillage de selle (153) étant disposé au-dessous du garde-boue arrière (132), et le garde-boue arrière (132) définissant en outre une ouverture permettant à au moins une partie du crochet de verrouillage de selle (153) de la traverser ; l'ensemble de selle (15) étant dans le premier état de selle lorsque le crochet de verrouillage de selle (153) traverse l'ouverture et coopère avec le dispositif de limitation ; dans lequel une distance verticale (L5) entre le bas du crochet de verrouillage de selle (153) et le sommet du garde-boue arrière (132) est dans une plage de 80 mm à 320 mm lorsque l'ensemble de selle (15) est dans le premier état de selle ; dans lequel une distance verticale (L5) entre le bas du crochet de verrouillage de selle (153) et le sommet du garde-boue arrière (132) est dans une plage de 100 mm à 300 mm lorsque l'ensemble de selle (15) est dans le premier état de selle.

13. Véhicule tout-terrain (100) selon la revendication 12, dans lequel une distance horizontale (L6) entre le crochet de verrouillage de selle (153) et un bord arrière du garde-boue arrière (132) est dans une plage de 0 à 500 mm lorsque l'ensemble de selle (15) est dans le premier état de selle.

14. Véhicule tout-terrain (100) selon la revendication 12, dans lequel le crochet de verrouillage de selle (153) comprend une base de montage de crochet (1531) fixée au fond de la selle (151), un crochet de verrouillage (1532) pour verrouiller et déverrouiller la selle (151), un axe et un ressort de torsion, le crochet de verrouillage (1532) étant fixé de manière rotative sur la base de montage de crochet (1531) par le ressort de torsion et l'axe ; un dispositif de limitation coopérant avec le crochet étant fixé au châssis (11) ; dans lequel le crochet de verrouillage (1532) comprend un corps de crochet (1532a), une rainure de verrouillage (1532b) définie sur le corps de crochet (1532a) et une portion d'actionnement (1532c) disposée sur le corps de crochet (1532a) pour être actionnée par le conducteur ; dans lequel la rainure de verrouillage (1532b) définit une ouverture de rainure de verrouillage (1532d) orientée vers l'avant, la portion d'actionnement (1532c) est au-dessous de la rainure de verrouillage (1532b), et la portion d'actionnement (1532c) est disposée du même côté que l'ouverture de rainure de verrouillage (1532d).

15. Véhicule tout-terrain (100) selon la revendication 1, comprenant en outre une unité de commande (24) pour commander le système d'entraînement ; l'ensemble de selle (15) comprend un capteur de pression (1522), un capteur de température et un élément chauffant (1523), le capteur de pression (1522), le capteur de température et l'élément chauffant (1523) étant reliés électriquement à l'unité de commande (24) ; l'unité de commande (24) commande l'élément chauffant (1523) pour arrêter le chauffage lorsqu'un signal de température délivré par le capteur de température à l'unité de commande (24) indique que la température est supérieure à un seuil prédéfini, l'unité de commande (24) commande l'élément chauffant (1523) pour chauffer la selle (151) lorsqu'un signal de température délivré par le capteur de température à l'unité de commande (24) indique que la température est inférieure ou égale au seuil prédéfini ; le capteur de pression (1522) délivre une première valeur de signal à l'unité de commande (24) pour commander l'élément chauffant (1523) afin d'arrêter un premier état de chauffage, le capteur de pression (1522) délivre une deuxième valeur de signal à l'unité de commande (24) pour commander l'élément chauffant (1523) afin de chauffer la selle (151) dans un deuxième état ; l'unité de commande (24) commande l'élément chauffant (1523) pour chauffer la selle (151) lorsqu'un signal de température délivré par le capteur de température à l'unité de commande (24) indique que la température est inférieure ou égale au seuil prédéfini et lorsque le capteur de pression (1522) délivre la deuxième valeur de signal à l'unité de commande (24) ; dans lequel l'unité de commande (24) comprend en outre une unité d'interaction à distance pouvant être connectée à un terminal distant, l'unité d'interaction à distance recevant des signaux du terminal distant et délivrant des signaux à distance à l'unité de commande (24), l'unité de commande (24) commandant l'élément chauffant (1523) pour chauffer la selle (151) en fonction desdits signaux ; dans lequel, lorsque le capteur de pression (1522) est dans un premier état de pression, mais que l'unité de commande (24) détecte que le véhicule tout-terrain (100) est dans un état déverrouillé ou que le véhicule tout-terrain (100) est dans un état de non-stationnement, l'unité de commande (24) commande le véhicule tout-terrain (100) pour émettre un rappel et/ou commande l'unité d'interaction à distance pour envoyer un rappel au terminal distant.
